(19) Europäisches Patentamt / European Patent Office / Office européen des brevets

(11) EP 1 233 673 B1

(12) **EUROPÄISCHE PATENTSCHRIFT**

(45) Veröffentlichungstag und Bekanntmachung des Hinweises auf die Patenterteilung:
**21.11.2007 Patentblatt 2007/47**

(21) Anmeldenummer: **00972832.0**

(22) Anmeldetag: **20.10.2000**

(51) Int Cl.:
***A01N 61/00*** *(2006.01)* ***A01N 43/80*** *(2006.01)*
***A01N 43/54*** *(2006.01)* ***A01N 41/10*** *(2006.01)*

(86) Internationale Anmeldenummer:
**PCT/EP2000/010369**

(87) Internationale Veröffentlichungsnummer:
**WO 2001/028341 (26.04.2001 Gazette 2001/17)**

# (54) HYDROXYPHENYLPYRUVAT-DIOXYGENASEINHIBITOR-HERBIZIDE IN SYNERGISTISCHEN MISCHUNGEN

SYNERGISTIC HERBICIDAL AGENTS THAT CONTAIN HERBICIDES FROM THE GROUP OF THE HYDROXYPHENYLPYRUVATE DIOXYGENASE INHIBITORS

AGENTS HERBICIDES SYNERGETIQUES CONTENANT DES HERBICIDES FAISANT PARTIE DU GROUPE DES INHIBITEURS DE L'HYDROXYPHENYLPYRUVATE DIOXYGENASE

(84) Benannte Vertragsstaaten:
**AT BE CH CY DE DK ES FI FR GB GR IE IT LI LU MC NL PT SE**

(30) Priorität: **22.10.1999 DE 19950943**

(43) Veröffentlichungstag der Anmeldung:
**28.08.2002 Patentblatt 2002/35**

(60) Teilanmeldung:
**07017701.9**

(73) Patentinhaber: **Bayer CropScience AG**
**40789 Monheim (DE)**

(72) Erfinder:
- **BIERINGER, Hermann**
  **65817 Eppstein (DE)**
- **VAN ALMSICK, Andreas**
  **D-61184 Karben (DE)**
- **HACKER, Erwin**
  **65239 Hochheim (DE)**
- **WILLMS, Lothar**
  **65719 Hofheim (DE)**

(56) Entgegenhaltungen:
**EP-A- 0 230 596** **EP-A- 0 354 047**
**EP-A- 0 768 033** **EP-A- 0 807 382**
**WO-A-00/00029** **WO-A-00/00031**
**WO-A-00/03591** **WO-A-00/08936**
**WO-A-00/30447** **WO-A-95/15691**
**WO-A-95/28839** **WO-A-96/26200**
**WO-A-97/22253** **WO-A-97/23134**
**WO-A-97/34486** **WO-A-97/48276**
**WO-A-98/56251** **WO-A-99/65314**
**WO-A-99/66795** **FR-A- 2 675 340**
**US-A- 5 912 207**

- **DATABASE WPI Section Ch, Week 199733 Derwent Publications Ltd., London, GB; Class C02, AN 1997-363315 XP002162798 & WO 97 23135 A (IDEMITSU KOSAN CO LTD), 3. Juli 1997 (1997-07-03)**
- **DATABASE CHEMABS [Online] CHEMICAL ABSTRACTS SERVICE, COLUMBUS, OHIO, US; retrieved from STN-INTERNATIONAL, accession no. 126:196420 CA XP002171352 & ZA 9 510 980 A (IDEMITSU KOSAN) 25. Juni 1996 (1996-06-25)**
- **PATENT ABSTRACTS OF JAPAN vol. 017, no. 391 (C-1087), 22. Juli 1993 (1993-07-22) & JP 05 070426 A (NIPPON SODA), 23. März 1993 (1993-03-23)**
- **DATABASE WPI Section Ch, Week 199240 Derwent Publications Ltd., London, GB; Class C03, AN 1992-326715 XP002171353 & JP 04 230301 A (NIPPON SODA CO), 19. August 1992 (1992-08-19)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

- **DATABASE WPI Section Ch, Week 198717 Derwent Publications Ltd., London, GB; Class C02, AN 1987-119455 XP002171354 & JP 62 063503 A (NISSAN CHEM IND LTD), 20. März 1987 (1987-03-20)**
- **DATABASE WPI Section Ch, Week 199833 Derwent Publications Ltd., London, GB; Class C02, AN 1998-387670 XP002171355 & WO 98 28981 A (NIPPON SODA CO), 9. Juli 1998 (1998-07-09)**
- **LEE D L ET AL: "THE STRUCTURE-ACTIVITY RELATIONSHIPS OF THE TRIKETONE CLASS OF HPPDHERBICIDES" PESTICIDE SCIENCE,GB, ELSEVIER APPLIED SCIENCE PUBLISHER. BARKING, Bd. 54, Nr. 4, Dezember 1998 (1998-12), Seiten 377-384, XP000804297 ISSN: 0031-613X**


Bemerkungen:

Die Akte enthält technische Angaben, die nach dem Eingang der Anmeldung eingereicht wurden und die nicht in dieser Patentschrift enthalten sind.

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie herbizide Mittel, welche als Wirkstoff ein Herbizid aus der Gruppe der Hemmstoffe der Hydroxyphenylpyruvat-Dioxygenase in Kombination mit mindestens einem weiteren Herbizid enthalten.

Herbizide aus der oben genannten Gruppe der Hemmstoffe der Hydroxyphenylpyruvat-Dioxygenase sind aus zahlreichen Dokumenten bekannt. Solche in jüngerer Vergangenheit offenbarten Hemmstoffe tragen üblicherweise einen substituierten Benzoylrest an einem ebenfalls substituierten Rest aus der Gruppe Cyclohexandion, Pyrazol, Isoxazol, Isothiazol und 3-Oxopropionitril. So werden in WO 97/23135 Benzoylpyrazole, in EP-A 0 810 227 Benzoylisoxazole und in WO 98/29406 Benzoylcyclohexandione mit jeweils herbizider Wirkung beschrieben. Aus WO 99/06259 sind weitere herbizide Benzoylderivate bekannt. Dort wird auch auf den gleichartigen Wirkmechanismus, der den hier beschriebenen Benzoylderivaten zugrunde liegt, hingewiesen. WO 97/03562 offenbart herbizide Mittel enthaltend bestimmte Hemmstoffe der Hydroxyphenylpyruvat-Dioxygenase und ein Herbizid aus der Reihe der Chloracetanilide. EP 0 569 944 A2 beschreibt herbizide Mittel enthaltend den HPPD-Hemmstoff Sulcotrione und ein Herbizid aus der Reihe der ALS-Inhibitoren. EP 0 614 606 A2 nennt herbizide Mittel enthaltend Dimethenamid und verschiedene andere Herbizide, unter anderem auch Hemmstoffe der Hydroxyphenylpyruvat-Dioxygenase. DE 4421342 A1 offenbart herbizide Mittel enthaltend ein Herbizid aus der Reihe der Chloracetanilide und einen Hemmstoff der Hydroxyphenylpyruvat-Dioxygenase. JP 05 070426 beschreibt herbizide Mittel enthaltend bestimmte Hemmstoffe aus der Reihe der Hydroxyphenylpyruvat-Dioxygenase und verschiede andere Herbizide, unter anderem atrazin, cyanazin, bentazon, bromosynil, 2,4-D, dicamba und nicosulfuron.

JP 04 230301 offenbart herbizide Mittel enthaltend bestimmte Hemmstoffe aus der Reihe der Hydroxyphenylpyruvat-Dioxygenase und ein Herbizid aus der Gruppe Atrazin, Cyanazin, Bentazone, Bromoxynil, 2,4-D, Dicamba und Nicosulfuron-methyl. WO 98/28981 beschreibt herbizide Mittel enthaltend Benzoylpyrazole und Herbizide aus der Reihe der Photosynthese-Hemmstoffe wie Atrazin und Isoproturon. FR -A-2 675 340 beschreibt offenbart herbizide Mittel enthaltend Bromoxynil und bestimmte Hemmstoffe aus der Reihe der Hydroxyphenylpyruvat-Dioxygenase. WO 95/28839 offenbart herbizide Mittel enthaltend den HPPD-Hemmstoff Mesotrione und ein Triazin-Herbizid. EP 0 230 596 A2 EP beschreibt herbizide Mittel enthaltend den HPPD-Hemmstoff Sulcotrione und verschiedene andere Herbizide.

Die Anwendung der aus diesen Schriften bekannten Benzoylderivate ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln.

Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Keine der weiter oben genannten Schriften offenbart, daß zahlreiche Verbindungen aus der Gruppe der Hemmstoffe der Hydroxyphenylpyruvat-Dioxygenase zusammen mit ausgewählten anderen Herbiziden synergistische Effekte zeigen.

Aufgabe der vorliegenden Erfindung ist die Bereitstellung von herbiziden Mitteln mit gegenüber dem Stand der Technik verbesserten Eigenschaften.

Ein Gegenstand der Erfindung sind herbizide Mittel, gekennzeichnet durch einen wirksamen Gehalt an

A) mindestens einer Verbindung der allgemeinen Formel (I) sowie deren landwirtschaftlich üblichen Salze (Komponente A)

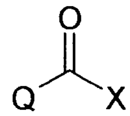

(I),

worin

X den Rest $X^1$

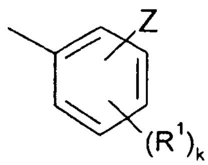

($X^1$)

Q den Rest $Q^1$

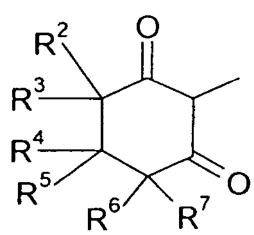

($Q^1$)

Z einen Rest $Z^1$, $CH_2$-$Z^1$ oder $Z^2$;

$Z^1$ ein über Kohlenstoff oder Stickstoff verknüpfter fünf- bis zehngliedriger monocyclischer oder bicyclischer gesättigter, teilgesättigter, vollständig ungesättigter oder aromatischer Ring, der neben Kohlenstoffatomen 1, 2, 3 oder 4 Heteroatome aus der Gruppe Sauerstoff, Schwefel und Stickstoff enthält und der unsubstituiert oder ein- oder mehrfach durch Halogen, Cyano, Nitro, Cyano-($C_1$-$C_4$)-alkyl, CO-$R^{15}$, ($C_1$-$C_4$)-Alkyl, Halogen-($C_1$-$C_4$)-alkyl, ($C_3$-$C_8$)-Cycloalkyl, ($C_1$-$C_4$)-Alkoxy, Halogen-($C_1$-$C_4$)-alkoxy, ($C_1$-$C_4$)-Alkylthio, Halogen-($C_1$-$C_4$)-alkylthio, Di-($C_1$-$C_4$)-alkylamino, unsubstituiert oder ein- oder mehrfach durch Halogen, Cyano, Nitro, ($C_1$-$C_4$)-Alkyl oder Halogen-($C_1$-$C_4$)-alkyl substituiertes Phenyl oder eine Oxogruppe, substituiert ist;

$z^2$ ($C_3$-$C_{12}$)-Cycloalkyloxy-($C_1$-$C_4$)-alkyl, Aryloxy-($C_1$-$C_4$)-alkyl, Heteroaryloxy-($C_1$-$C_4$)-alkyl, Heterocyclyl-($C_1$-$C_4$)-alkyl, Halogen-($C_1$-$C_4$)-alkoxy-($C_1$-$C_4$)-alkyl, Aryl-($C_1$-$C_4$)-alkoxy-($C_1$-$C_4$)-alkyl, Heteroaryl-($C_1$-$C_4$)-alkoxy-($C_1$-$C_4$)-alkyl, Heterocyclyl-($C_1$-$C_4$)-alkoxy-($C_1$-$C_4$)-al-

kyl, Aryl-($C_3$-$C_8$)-cycloalkylthio-($C_1$-$C_4$)-alkyl, Heteroaryl-($C_3$-$C_8$)-cycloalkylthio-($C_1$-$C_4$)-alkyl, Heterocyclyl-($C_3$-$C_8$)-cycloalkylthio-($C_1$-$C_4$)-alkyl, ($C_3$-$C_8$)-Cycloalkylsulfinyl)-($C_1$-$C_4$)-alkyl, ($C_3$- $C_8$)-Cycloalkylsulfonyl-($C_1$-$C_4$)-alkyl, ($C_3$-$C_8$)-Cycloalkylamino-($C_1$-$C_4$)-alkyl, ($C_3$-$C_8$)-Cycloalkylsulfonyloxy-($C_1$-$C_4$)-alkyl, ($C_3$-$C_8$)-Cycloalkylsulfonylamino-($C_1$-$C_4$)-alkyl, ($C_3$-$C_8$)-Cycloalkylcarbonyl-($C_1$-$C_4$)-alkyl, ($C_3$-$C_8$)-Cycloalkyl-carbonyloxy-($C_1$-$C_4$)-alkyl, ($C_3$-$C_8$)-Cycloalkoxycarbonyl-($C_1$-$C_4$)-alkyl, ($C_3$-$C_8$)-Cycloalkylcarbonylamino-($C_1$-$C_4$)-alkyl, ($C_3$-$C_8$)-Cycloalkylaminocarbonyl-($C_1$-$C_4$)-alkyl, ($C_4$-$C_{12}$)-Cycloalkyl-($C_1$-$C_4$)-alkyl, ($C_4$-$C_{12}$)-Cycloalkylthio-($C_1$-$C_4$)-alkyl, ($C_4$-$C_{12}$)-Cycloalkylsulfinyl-($C_1$-$C_4$)-alkyl, ($C_4$-$C_{12}$)-Cycloalkylsulfonyl- ($C_1$-$C_4$)-alkyl, ($C_4$-$C_{12}$)-Cycloalkylamino-($C_1$-$C_4$)-alkyl, ($C_4$-$C_{12}$)-Cycloalkylsulfonyloxy-($C_1$- $C_4$)-alkyl, ($C_4$-$C_{12}$)-Cycloalkyl-sulfonylamino-($C_1$-$C_4$)-alkyl, ($C_4$-$C_{12}$)-Cycloalkylcarbonyl-($C_1$- $C_4$)-alkyl, ($C_4$-$C_{12}$)-Cycloalkylcarbonyloxy-($C_1$-$C_4$)-alkyl, ($C_4$-$C_{12}$)-Cycloalkoxycarbonyl- (C,-C4)-alkyl, ($C_4$-$C_{12}$)-Cycloalkylcarbonylamino-($C_1$-$C_4$)-alkyl, ($C_4$-$C_{12}$)-Cycloalkylaminocarbonyl-($C_1$-$C_4$)-alkyl, Arylthio-($C_1$-$C_4$)-alkyl, Arylsulfinyl-($C_1$-$C_4$)-alkyl, Arylsulfonyl-($C_1$-$C_4$)-alkyl, Arylamino-($C_1$-$C_4$)-alkyl, Arylsulfonyloxy-($C_1$-$C_4$)-alkyl, Arylsulfonylamino-($C_1$-$C_4$)-alkyl, Arylcarbonyl-($C_1$-$C_4$)-alkyl, Arylcarbonyloxy-($C_1$-$C_4$)-alkyl, Aryloxycarbonyl-($C_1$-$C_4$)-alkyl, Arylcarbonylamino-($C_1$-$C_4$)-alkyl, Arylaminocarbonyl-($C_1$-$C_4$)-alkyl, Heteroarylthio-($C_1$-$C_4$)-alkyl, Heteroarylsulfinyl-($C_1$-$C_4$)-alkyl, Heteroarylsulfonyl-($C_1$-$C_4$)-alkyl, Heteroarylamino- ($C_1$-$C_4$)-alkyl, Heteroarylsulfonyloxy-($C_1$-$C_4$)-alkyl, Heteroarylsulfonylamino-($C_1$-$C_4$)-alkyl, Heteroarylcarbonyl-($C_1$-$C_4$)-alkyl, Heteroarylcarbonyloxy-($C_1$-$C_4$)-alkyl, Heteroaryloxycarbonyl-($C_1$-$C_4$)-alkyl, Heteroarylcarbonylamino-($C_1$-$C_4$)-alkyl, Heteroarylaminocarbonyl-($C_1$- $C_4$)-alkyl, Heterocyclylthio-($C_1$-$C_4$)-alkyl, Heterocyclylsulfinyl-($C_1$-$C_4$)-alkyl, Heterocycylsulfonyl-($C_1$-$C_4$)-alkyl, Heterocyclylamino-($C_1$-$C_4$)-alkyl, Heterocyclylsulfonyloxy-($C_1$-$C_4$)-alkyl, Heterocyclylsulfonylamino-($C_1$-$C_4$)-alkyl, Heterocydylcarbonyl-($C_1$-$C_4$)-alkyl, Heterocyclylcarbonyloxy-($C_1$-$C_4$)-alkyl, Heterocyclyloxycarbonyl-($C_1$-$C_4$)-alkyl, Heterocyclylcarbonylamino- ($C_1$-$C_4$)-alkyl, Heterocyclylaminocarbonyl-($C_1$-$C_4$)-alkyl, Halogen-($C_1$-$C_4$)-alkylthio-($C_1$-$C_4$)- alkyl, Halogen-($C_1$-$C_4$)-alkylsulfinyl-($C_1$-$C_4$)-alkyl, Halogen-($C_1$-$C_4$)-alkylsulfonyl-($C_1$-$C_4$)-alkyl, Halogen-($C_1$-$C_4$)-alkylamino-($C_1$-$C_4$)-alkyl, Halogen-($C_1$-$C_4$)-alkylsulfonyloxy-($C_1$-$C_4$)-alkyl, Halogen-($C_1$-$C_4$)-alkylsulfonylamino-($C_1$-$C_4$)-alkyl, Halogen-($C_1$-$C_4$)-alkylcarbonyl-($C_1$- $C_4$)-alkyl, Halogen-($C_1$-$C_4$)-alkylcarbonyloxy-($C_1$-$C_4$)-alkyl, Halogen-($C_1$-$C_4$)-alkyloxycarbonyl-($C_1$-$C_4$)-alkyl, Halogen-($C_1$-$C_4$)-alkylcarbonylamino-($C_1$-$C_4$)-alkyl, Halogen-($C_1$-$C_4$)-alkylaminocarbonyl-($C_1$-$C_4$)-alkyl, Aryl-($C_1$-$C_4$)-alkylthio-($C_1$-$C_4$)-alkyl, Aryl-($C_1$-$C_4$)-alkylsulfinyl- ($C_1$-$C_4$)-alkyl, Aryl-($C_1$-$C_4$)-alkylsulfonyl-($C_1$-$C_4$)-alkyl, Aryl-($C_1$-$C_4$)-alkylamino-($C_1$-$C_4$)-alkyl, Aryl-($C_1$-$C_4$)-alkylsulfonyloxy-($C_1$-$C_4$)-alkyl, Aryl-($C_1$-$C_4$)-alkylsulfonylamino-($C_1$-$C_4$)-alkyl, Aryl-($C_1$-$C_4$)-alkylcarbonyl-($C_1$-$C_4$)-alkyl, Aryl-($C_1$-$C_4$)-alkylcarbonyloxy-($C_1$-$C_4$)-alkyl, Aryl- ($C_1$-$C_4$)-alkyloxycarbonyl-($C_1$-$C_4$)-alkyl, Aryl-($C_1$-$C_4$)-alkylcarbonylamino-($C_1$-$C_4$)-alkyl, Aryl- ($C_1$-$C_4$)-alkylaminocarbonyl-($C_1$-$C_4$)-alkyl, Heteroaryl-($C_1$-$C_4$)-alkylthio-($C_1$-$C_4$)-alkyl, Heteroaryl-($C_1$-$C_4$)-alkylsulfinyl-($C_1$-$C_4$)-alkyl, Heteroaryl-($C_1$-$C_4$)-alkylsulfonyl-($C_1$-$C_4$)-alkyl, Heteroaryl-($C_1$-$C_4$)-alkylamino-($C_1$-$C_4$)-alkyl, Heteroaryl-($C_1$-$C_4$)-alkylsuffonyloxy-($C_1$-$C_4$)-alkyl, Heteroaryl-($C_1$-$C_4$)-alkylsulfonylamino-($C_1$-$C_4$)-alkyl, Heteroaryl-($C_1$-$C_4$)-alkylcarbonyl)-($C_1$- $C_4$)-alkyl, Heteroaryl-($C_1$-$C_4$)-alkylcarbonyloxy-($C_1$-$C_4$)-alkyl, Heteroaryl-($C_1$-$C_4$)-alkoxycarbonyl-($C_1$-$C_4$)-alkyl, Heteroaryl-($C_1$-$C_4$)-alkylcarbonylamino-($C_1$-$C_4$)-alkyl, Heteroaryl-($C_1$- $C_4$)-alkylaminocarbonyl-($C_1$-$C_4$)-alkyl, Heterocyclyl-($C_1$-$C_4$)-alkylthio-($C_1$-$C_4$)-alkyl, Heterocyclyl-($C_1$-$C_4$)-alkylsulfinyl-($C_1$-$C_4$)-alkyl, Heterocydyl-($C_1$-$C_4$)-alkylsulfonyl-($C_1$-$C_4$)-alkyl, Heterocyclyl-($C_1$-$C_4$)-alkylamino-($C_1$-$C_4$)-alkyl, Heterocyclyl-($C_1$-$C_4$)-alkylsulfonyloxy-($C_1$-$C_4$)- alkyl, Heterocydyl-($C_1$-$C_4$)-alkylsulfonylamino-($C_1$-$C_4$)-alkyl, Heterocyclyl- ($C_1$-$C_4$)-alkylcarbonyl-($C_1$- $C_4$)-alkyl, Heterocyclyl-($C_1$-$C_4$)-alkylcarbonyloxy-($C_1$-$C_4$)-alkyl, Heterocyclyl-($C_1$-$C_4$)-alkoxycarbonyl-($C_1$-$C_4$)-alkyl, Heterocyclyl-($C_1$-$C_4$)-alkylcarbonylamino-($C_1$-$C_4$)-alkyl, Heterocyclyl-($C_1$-$C_4$)-alkylcarbonylamino-($C_1$-$C_4$)-alkyl, Heterocyclyl-($C_1$-$C_4$)-alkylaminocarbonyl-($C_1$- $C_4$)-alkyl,

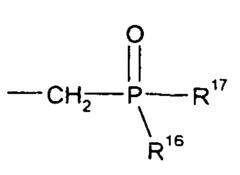 , 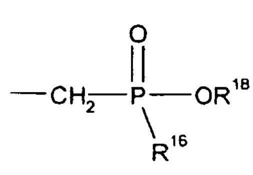 , 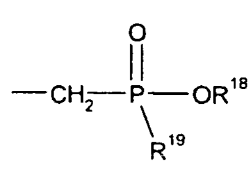

oder $O-(CH_2)_p-O-(CH_2)_w-R^{20}$;

Y O oder $NR^{26}$;

$R^1$ Halogen, Cyano, Nitro, $(Y)_n-S(O)_q-R^{28}$, $(Y)_n-CO-R^{15}$ oder durch v Halogenatome oder k $(C_1-C_4)$-Alkoxy-Gruppen substituiertes $(C_1-C_6)$-Alkyl, $(C_2-C_6)$-Alkenyl, $(C_2-C_6)$-Alkinyl oder $(C_1-C_4)$-Alkoxy;

$R^2$, $R^3$, $R^5$ und $R^7$ unabhängig voneinander Wasserstoff oder $(C_1-C_6)$-Alkyl;

$R^4$ Wasserstoff, durch k Reste aus der Gruppe Halogen, $(C_1-C_6)$-Alkylthio und $(C_1-C_6)$-Alkoxy substituiertes $(C_1-C_6)$-Alkyl, $(C_3-C_6)$-Cycloalkyl, Tetrahydropyranyl-3, Tetrahydropyranyl-4 oder Tetrahydrothiopyranyl-3;

$R^6$ Wasserstoff, $(C_1-C_6)$-Alkyl oder $CO_2R^{15}$, oder

$R^4$ und $R^6$ bilden gemeinsam eine Bindung oder einen drei- bis sechsgliedrigen carbocyclischen Ring;

$R^{15}$ $(C_1-C_4)$-Alkyl, Halogen-$(C_1-C_4)$-alkyl oder $NR^{26}R^{27}$;

$R^{16}$ und $R^{17}$ unabhängig voneinander durch k Reste aus der Gruppe Halogen, Cyano, Nitro, $(C_1-C_6)$-Alkyl, Halogen-$(C_1-C_6)$-alkyl, $(C_1-C_6)$-Alkoxy und Halogen-$(C_1-C_6)$-alkoxy substituiertes $(C_1-C_6)$-Alkyl, $(C_2-C_6)$-Alkeny), $(C_2-C_6)$-Alkinyl, Halogen-$(C_1-C_6)$-alkyl, Aryl oder Aryl-$(C_1-C_6)$-alkyl;

$R^{18}$ und $R^{19}$ unabhängig voneinander Wasserstoff oder $R^{16}$, oder

$R^{18}$ und $R^{19}$ bilden zusammen eine $(C_2-C_5)$-Alkenylkette;

$R^{20}$ $(C_1-C_4)$-Alkyl, $(C_2-C_8)$-Alkenyl, $(C_2-C_6)$-Alkinyl, Halogen-$(C_1-C_6)$-alkyl, Halogen-$(C_2-C_6)$-alkenyl, Halogen-$(C_2-C_6)$-alkinyl, $(C_1-C_6)$-Alkoxy, $(C_2-(C_6)$-Alkenyloxy, $(C_2-C_6)$-Alkinyloxy, Halogen-$(C_1-C_6)$-alkoxy, Halogen-$(C_2-C_6)$-alkinyloxy oder Halogen-$(C_2-C_6)$-alkenyloxy;

$R^{26}$ Wasserstoff oder $(C_1-C_6)$-Alkyl;

$R^{27}$ Wasserstoff, $(C_1-C_6)$-Alkyl oder $(C_1-C_6)$-Alkoxy, oder

$R^{26}$ und $R^{27}$ bilden zusammen $(CH_2)_2$, $(CH_2)_3$, $(CH_2)_4$, $(CH_2)_5$, oder $(CH_2)_2O(CH_2)_2$;

$R^{28}$ $(C_1-C_4)$-Alkyl, Halogen-$(C_1-C_4)$-alkyl oder $NR^{26}R^{27}$;

k 0, 1, 2 oder 3;

n 0 oder 1 ;

p 1, 2 oder 3;

v 0, 1, 2, 3, 4 oder 5;

q 0, 1 oder 2;

w 0, 1, 2 oder 3 bedeuten,

und

B) mindestens einer Verbindung (Komponente B) aus der Gruppe

umfassend acetochlor, alachlor, atrazin, bromoxynil, carfentrazone-ethyl, diflufenzopyr, dimethenamid, flufenacet, flumetsulam, fluthiacet-methyl, halosulfuron, imazamox, imazapyr, imazaquin, imazethapyr, iodosulfuron, metolachlor,

metosulam, metribuzin, nicosulfuron, pethoxamid, pendimethalin, primisulfuron, prosulfuron, pyridate, rimsulfuron, thenylchlor, thifensulfuron-methyl, tritosulfuron und N-[(4,6-Dimethoxy-pyrimidin-2-yl)-aminocarbonyl]-2-dimethylaminocarbonyl-5-formyl-benzolsulfonamid,
wobei diese Mittel die Verbindungen der Formel (I) oder deren Salze (Komponente A) und die Verbindungen der Gruppe B (Komponente B) in einem Gewichtsverhältnis von 1:2000 bis 2000:1 enthalten.

In Formel (I) und allen nachfolgenden Formeln können kettenförmige kohlenstoffhaltige Reste wie Alkyl, Alkoxy, Halogenalkyl, Halogenalkoxy, Alkylamino und Alkylthio sowie die entsprechenden ungesättigten und/oder substituierten Reste im Kohlenstoffgerüst wie Alkenyl und Alkinyl jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 4 C-Atomen, bevorzugt. Alkylreste, auch in den zusammengesetzten Bedeutungen wie Alkoxy, Halogenalkyl usw., bedeuten z.B. Methyl, Ethyl, n- oder i-Propyl, n-, i-, t-oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl. Die Mehrfachbindung kann sich in beliebiger Position des ungesättigten Rests befinden.

Cycloalkyl bedeutet, sofern nicht anders angegeben, ein carbocyclisches, gesättigtes Ringsystem mit drei bis neun C-Atomen, z.B. Cyclopropyl, Cyclopentyl oder Cyclohexyl. Analog bedeutet Cycloalkenyl eine monocyclische Alkenylgruppe mit drei bis neun Kohlenstoffringgliedern, z.B. Cyclopentyl, Cyclobutenyl, Cyclpentyl und Cyclohexenyl, wobei sich die Doppelbindung an beliebiger Position befinden kann.

Im Falle einer zweifach substituierten Aminogruppe, wie Dialkylamino, können diese beiden Substituenten gleich oder verschieden sein.

Halogen bedeutet Fluor, Chlor, Brom oder lod. Halogenalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. $CF_3$, $CHF_2$, $CH_2F$, $CF_3CF_2$, $CH_2FCHCl$, $CCl_3$, $CHCl_2$, $CH_2CH_2Cl$; Halogenalkoxy ist z.B. $OCF_3$, $OCHF_2$, $OCH_2F$, $CF_3CF_2O$, $OCH_2CF_3$ und $OCH_2CH_2Cl$; entsprechendes gilt für Halogenalkenyl und andere durch Halogen substituierte Reste.

Unter dem Begriff Heterocyclyl sind die Reste von drei- bis neungliedrigen, gesättigten, teilweise oder vollständig ungesättigen Heterocyclen zu verstehen, die ein bis drei Heteroatome ausgewählt aus der Gruppe Sauerstoff, Stickstoff und Schwefel enthalten. Die Verknüpfung kann, sofern chemisch möglich an beliebiger Position des Heterocyclus erfolgen: Bevorzugt steht Heterocyclyl für Aziridinyl, Oxiranyl, Tetrahydrofuranyl, Tetrahydropyranyl, Tetrahydrothienyl, Pyrrolidinyl, Isoxazolidinyl, Isoxazolinyl, Thiazolinyl, Thiazolidinyl, Pyrazolidinyl, Morpholinyl, Piperidinyl, Dioxolanyl, Dioxanyl, Piperazinyl, Oxepanyl, Azepanyl.

Heteroaryl steht für den Rest eines Heteroaromaten, der neben Kohlenstoffringgliedern ein bis fünf Heteroatome aus der Gruppe Stickstoff, Sauerstoff und Schwefel enthält. Bevorzugt steht Heteroaryl für Furanyl, Thienyl, Pyrrolyl, Pyrazolyl, Imidazolyl, Oxazolyl, Thiazolyl, Isoxazolyl, Isothiazolyl, 1,2,3-Triazolyl, 1,2,4-Triazolyl, 1,2,3-Oxadiazolyl, 1,2,4-Oxadiazolyl, 1,2,5-Oxadiazolyl, 1,3,4-Oxadiazolyl, 1,2,3-Thiadiazolyl, 1,2,4-Thiadiazolyl, 1,2,5-Thiadiazolyl, 1,3,4-Thiadiazolyl, Tetrazolyl, Pyridyl, Pyridazinyl, Pyrimidinyl, Pyrazinyl, 1,2,4-Triazinyl, 1,3,5-Triazinyl.

Aryl steht für einen aromatischen mono- oder polycyclischen Kohlenwasserstoffrest, z.B. Phenyl, Naphthyl, Biphenyl und Phenanthryl.

Die Angabe "partiell oder vollständig halogeniert" soll zum Ausdruck bringen, daß in den derart charakterisierten Gruppen die Wasserstoffatome zum Teil oder vollständig durch gleiche oder verschiedene Halogenatome wie vorstehend genannt ersetzt sein können.

Ist eine Gruppe oder ein Rest mehrfach substituiert, so ist darunter zu verstehen, daß bei der Kombination der verschiedenen Substituenten die allgemeinen Grundsätze des Aufbaus chemischer Verbindungen zu beachten sind, d.h. daß nicht Verbindungen gebildet werden, von denen der Fachmann weiß, daß sie chemisch instabil oder nicht möglich sind. Dies gilt sinngemäß auch für die Verknüpfungen einzelner Reste.

Eine Oxogruppe kann, je nach sterischen und/oder elektronischen Verhältnissen, auch in der tautomeren Enolform vorliegen.

Ist eine Gruppe oder ein Rest mehrfach durch andere Reste substituiert, so können diese anderen Reste gleich oder verschieden sein.

Ist eine Gruppe oder ein Rest ein- oder mehrfach substituiert ohne nähere Angabe der Anzahl und der Art der Substituenten, so ist darunter zu verstehen, daß diese Gruppe oder dieser Rest durch ein oder mehrere gleiche oder verschiedene Reste aus der Gruppe Halogen, Hydroxy, Cyano, Nitro, Formyl, Carboxyl, Amino, Thio, $(C_1\text{-}C_6)$-Alkyl, $(C_1\text{-}C_6)$-Alkoxy, Halogen-$(C_1\text{-}C_6)$-Alkyl, Halogen-$(C_1\text{-}C_6)$-Alkoxy, $(C_2\text{-}C_6)$-Alkenyl, $(C_2\text{-}C_6)$-Alkinyl, $(C_2\text{-}C_6)$-Alkenyloxy, $(C_2\text{-}C_6)$-Alkinyloxy, $(C_3\text{-}C_6)$-Cycloalkyl, $(C_3\text{-}C_6)$-Cycloalkoxy, $(C_1\text{-}C_6)$-Alkylthio, Halogen-$(C_1\text{-}C_6)$-Alkylthio substituiert ist.

Die Verbindungen der allgemeinen Formel 1 können je nach Art und Verknüpfung der Substituenten als Stereoisomere vorliegen. Sind beispielsweise eine oder mehrere Alkenylgruppen vorhanden, so können Diastereomere auftreten. Sind beispielsweise ein oder mehrere asymmetrische Kohlenstoffatome vorhanden, so können Enantiomere und Diastereomere auftreten. Stereoisomere lassen sich aus den bei der Herstellung anfallenden Gemischen nach üblichen Trennmethoden, beispielsweise durch chromatographische Trennverfahren, erhalten. Ebenso können Stereoisomere durch Einsatz stereoselektiver Reaktionen unter Verwendung optisch aktiver Ausgangs- und/oder Hilfsstoffe selektiv hergestellt werden. Die Erfindung betrifft auch alle Stereoisomeren und deren Gemische, die von der allgemeinen Formel I umfaßt, jedoch nicht spezifisch definiert sind.

Ganz besonders geeignet sind bromoxynil, diflufenzopyr, iodosulfuron, nicosulfuron, rimsulfuron und N-[(4,6-Dimethoxy-pyrimidin-2-yl)-aminocarbonyl]-2-d imethylaminocarbonyl-5-formyl-benzolsulfonamid.

Die oben mit ihren Common Names genannten Wirkstoffe sind beispielsweise aus "The Pesticide Manual" 11. Auflage, 1997, British Crop Protection Council, bekannt, beziehungsweise sind aus nachfolgender Tabelle ersichtlich:

| Common name oder Code No. | Struktur |
|---|---|
| flufenacet | 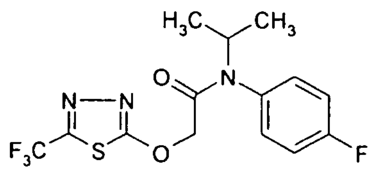 |
| iodosulfuron | 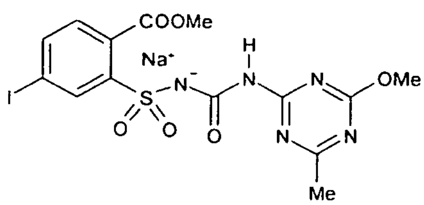 |
| pethoxamid | 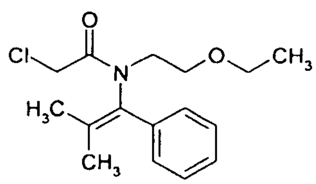 |
| tritosulfuron | 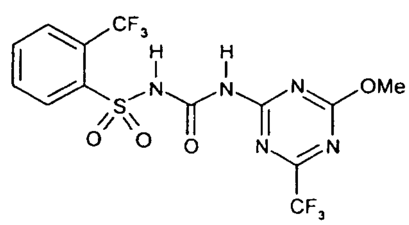 |

In den erfindungsgemäßen Kombinationen benötigt man in der Regel Aufwandmengen im Bereich von 1 bis 2000 g, vorzugsweise 10 bis 500 g Aktivsubstanz pro Hektar (ai/ha) der Komponente A) und 1 bis 2000 g, vorzugsweise 1 bis 500 g der Komponente B).

Die Gewichtsverhältnisse der einzusetzenden Komponenten A) zu B) können in weiten Bereichen variiert werden. Vorzugsweise ist das Mengenverhältnis im Bereich von 1:50 bis 500:1, insbesondere im Bereich von 1:20 bis 50:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe A) und B) resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao u.a. sowie im Obst- und Weinbau.

Die erfindungsgemäßen Mittel erfassen ein breites Unkautspektrum. Sie eignen sich beispielsweise zur Bekämpfung von annuellen und perennierenden Schadpflanzen wie beispielsweise aus den Spezies Abuthylon, Alopecurus, Avena, Chenopodium, Cynoden, Cyperus, Digitaria, Echinochloa, Elymus, Galium, Ipomoea, Lamium, Matricaria, Scirpus, Setaria, Sorghum, Veronica, Viola und Xanthium,

Die erfindungsgemäßen herbiziden Mittel zeichnen sich auch dadurch aus, daß die in den Kombinationen verwendeten und wirksamen Dosierungen der Komponenten A) und B) gegenüber einer Einzeldosierung verringert ist, so daß eine Reduzierung der nötigen Aufwandmengen der Wirkstoffe ermöglicht wird

Gegenstand der Erfindung ist auch ein Verfahren zur Bekämpfung von unerwünschtem Pflanzenwuchs, dadurch gekennzeichnet, daß man ein oder mehrere Herbizide A) mit einem oder mehreren Herbiziden B) auf die Schadpflanzen, Pflanzenteile davon oder die Anbaufläche appliziert.

Bei der gemeinsamen Anwendung von Herbiziden des Typs A) und B treten überadditive (= synergistische) Effekte auf. Dabei ist die Wirkung in den Kombinationen stärker als die zu erwartende Summe der Wirkungen der eingesetzten Einzelherbizide und der Wirkung des jeweiligen einzelnen Herbizids A) und B). Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Wirkstoffkombinationen können sowohl als Mischformulierungen der Komponenten A) und B), gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten A) und B) können auf verschiedene Arten formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen A) und B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten A) und B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

**A. Formulierungsbeispiele**

a) Ein Stäubemittel (WP) wird erhalten, indem man 10 Gew.-Teile eines WirkstoffsANirksstoffgemischs und 90 Gew.-Teile Talkum als Inertstoff mischt und in einer Schlagmühle zerkleinert.

b) Ein in Wasser leicht dispergierbares, benetzbares Pulver (WG) wird erhalten, indem man 25 Gew.-Teile eines WirkstoffsNVirksstoffgemischs, 64 Gew.-Teile kaofinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.

d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat, 3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

**B. Biologische Beispiele**

Kulturpflanzen wurden im Freiland auf Parzellen von 5 bis 10 $m^2$ Größe auf unterschiedlichen Böden und unter verschiedenen Klimabedingungen herangezogen., wobei das natürliche Vorhandensein von Schadpflanzen beziehungsweise deren Samen im Boden für die Versuche genutzt wurde. Die Behandlung mit den erfindungsgemäßen Mitteln beziehungsweise mit den einzel angewandten Herbiziden A) und B) erfolgte nach dem Auflaufen der Schad- und der Kulturpflanzen in der Regel im 2- bis 4-Blattstadium. Die Applikation der als WG, WP oder EC formulierten Wirkstoffe oder Wirkstoffkombinationen erfolgte im Nachauflauf. Nach 2 bis 8 Wochen erfolgte eine optische Bonitur im Vergleich zu einer unbehandelten Vergleichsgruppe. Dabei zeigte sich, daß die erfindungsgemäßen Mittel eine synergistische herbizide Wirkung gegen wirtschaftlich bedeutende mono- und dikotyle Schadpflanzen aufweisen, d.h. daß die erfindungsgemäßen Mittel meist eine höhere, teilweise deutlich höhere herbizide Wirkung aufweisen als es der Summe der Wirkungen der Einzelherbizide entspricht. Darüber hinaus liegen die herbiziden Wirkungen der erfindungsgemäßen Mittel über den Erwartungswerten nach Colby. Die Kulturpflanzen wurden hingegen durch die Behandlung nicht oder nur unwesentlich geschädigt.

Wenn die beobachteten Wirkungswerte der Mischungen bereits die formale Summe der Werte zu den Versuchen mit Einzelapplikationen übertreffen, dann übertreffen sie den Erwartungswert nach Colby ebenfalls, der sich nach folgender Formel errechnet (vgl. S. R. Colby; in Weeds 15 (1967) S. 20 bis 22):

$$E = \frac{A + B}{A \times B} \times 100$$

Dabei bedeuten:

A, B = Wirkung der Komponente A bzw.B in Prozent bei einer Dosierung von a bzw. b Gramm ai /ha.

E = Erwartungswert in % bei einer Dosierung von a+b Gramm ai/ha.

Die beobachteten Werte der nachfolgenden Versuchsbeispiele liegen über den Erwartungswerten nach Colby.

Die Abkürzungen bedeuten:

Schadpflanzen

| | | | |
|---|---|---|---|
| CHEAL | Chenopodium album | ECHCG | Echinocloa crus galli |
| GALAP | Galium aparine | KCHSC | Kochia scoparia |
| LAMAM | Lamium amplexicaule | HBPU | Pharbitis purpurea |
| POLCO | Polygonum convolvulus | POROL | Portulaca oleracea |

Kulturpflanzen

| | |
|---|---|
| HORVS | Hordeum vulgaris |
| TRZDU | Triticum davam |
| ZEMX | Zea mays |

In den Beispielen wurden die folgenden Verbindungen verwendet:

| | |
|---|---|
| A1 | 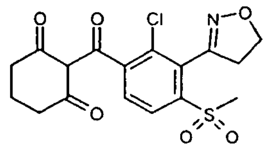 |
| A3 | 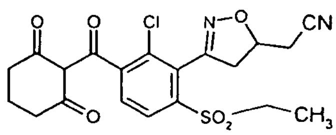 |
| A4 | 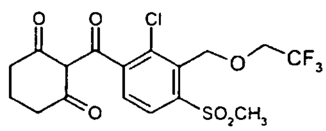 |
| B1 | 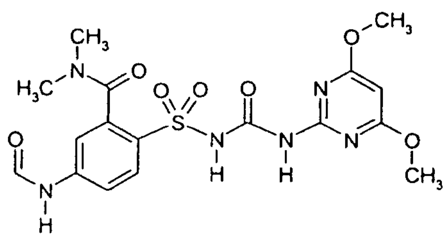 |
| B4 | iodosulfuron |
| B5 | bromoxynil |

Beispiel B.I

| Verbindung | Dosierung [g ai/ha] | KCHSC | |
|---|---|---|---|
| | | gefunden | Wert E (nach Colby) |
| A1 | 25 | 28 | |
| B1 | 30<br>60 | 30<br>33 | |
| A1 + B1 | 25 + 30<br>25 + 60 | 65<br>72 | 50<br>52 |

Beispiel B.VII

| Verbindung | Dosierung [g ai/ha] | BRAPL | | ZEAMX |
|---|---|---|---|---|
| | | gefunden | Wert E (nach Colby) | gefunden |
| A3 | 75 | 65 | | 0 |
| B5 | 300 | 0 | | 0 |
| A3+B5 | 75+300 | 80 | 65 | 0 |

Beispiel B.VIII

| Verbindung | Dosierung [g ai/ha] | POROL | | TRZDU |
|---|---|---|---|---|
| | | gefunden | Wert E (nach Colby) | gefunden |
| A4 | 25 | 5 | | 5 |
| B4 | 2,5 | 20 | | 15 |
| A4+B4 | 25+2,5 | 60 | 24 | 15 |

## Patentansprüche

1. Herbizide Mittel, **gekennzeichnet durch** einen wirksamen Gehalt an

A) mindestens einer Verbindung der allgemeinen Formel (I) sowie deren landwirtschaftlich üblichen Salze (Komponente A)

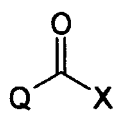

(I),

worin

X den Rest $X^1$

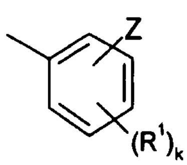

($X^1$)

Q den Rest $Q^1$

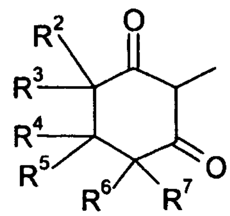

**($Q^1$)**

Z einen Rest $Z^1$, $CH_2$-$Z^1$ oder $Z^2$;

$Z^1$ ein über Kohlenstoff oder Stickstoff verknüpfter fünf bis zehngliedriger monocyclischer oder bicyclischer gesättigter, teilgesättigter, vollständig ungesättigter oder aromatischer Ring, der neben Kohlenstoffatomen 1, 2, 3 oder 4 Heteroatome aus der Gruppe Sauerstoff, Schwefel und Stickstoff enthält und der unsubstituiert oder ein- oder mehrfach **durch** Halogen, Cyano, Nitro, Cyano-($C_1$-$C_4$)-alkyl, CO-$R^{15}$, ($C_1$-$C_4$)-Alkyl, Halogen-($C_1$-$C_4$)-alkyl, ($C_3$-$C_8$)-Cycloalkyl, ($C_1$-$C_4$)-Alkoxy, Halogen-($C_1$-$C_4$)-alkoxy, ($C_1$-$C_4$)-Alkylthio, Halogen-($C_1$-$C_4$)-alkylthio, Di-($C_1$-$C_4$)-alkylamino, unsubstituiert oder ein- oder mehrfach **durch** Halogen, Cyano, Nitro, ($C_1$-$C_4$)-Alkyl oder Halogen-($C_1$-$C_4$)-alkyl substituiertes Phenyl oder eine Oxogruppe, substituiert ist;

$z^2$ ($C_3$-$C_{12}$)-Cycloalkyloxy-($C_1$-$C_4$)-alkyl, Aryloxy-($C_1$-$C_4$)-alkyl, Heteroaryloxy-($C_1$-$C_4$)-alkyl, Heterocyclyl-($C_1$-$C_4$)-alkyl, Halogen-($C_1$-$C_4$)-alkoxy-($C_1$-$C_4$)-alkyl, Aryl-($C_1$-$C_4$)-alkoxy-($C_1$-$C_4$)-alkyl, Heteroaryl-($C_1$-$C_4$)-alkoxy-($C_1$-$C_4$)-alkyl, Heterocyclyl-($C_1$-$C_4$)-alkoxy-($C_1$-$C_4$)-alkyl, Aryl-($C_3$-$C_8$)-cycloalkylthio-($C_1$-$C_4$)-alkyl, Heteroaryl-($C_3$-$C_8$)-cycloalkylthio-($C_1$-$C_4$)-alkyl, Heterocyclyl-($C_3$-$C_8$)-cycloalkylthio-($C_1$-$C_4$)-alkyl,($C_3$-$C_8$)-Cycloalkylsulfinyl)-($C_1$-$C_4$)-alkyl,($C_3$-$C_8$)-Cycloalkylsulfonyl-($C_1$-$C_4$)-alkyl,($C_3$-$C_8$)-Cycloalkylamino-($C_1$-$C_4$)-alkyl, ($C_3$-$C_8$)-Cycloalkylsulfonyloxy-($C_1$-$C_4$)-alkyl, ($C_3$-$C_8$)-Cycloalkylsulfonylamino-($C_1$-$C_4$)-alkyl, ($C_3$-$C_8$)-Cycloalkylcarbonyl-($C_1$-$C_4$)-alkyl, ($C_3$-$C_8$)-Cycloalkylcarbonyloxy-($C_1$-$C_4$)-alkyl, ($C_3$-$C_8$)-Cycloalkoxycarbonyl-($C_1$-$C_4$)-alkyl,($C_3$-$C_8$)-Cycloalkylcarbonylamino-($C_1$-$C_4$)-alkyl,($C_3$-$C_8$)-Cycloalkylaminocarbonyl-($C_1$-$C_4$)-alkyl, ($C_4$-$C_{12}$)-Cycloalkyl-($C_1$-$C_4$)-alkyl, ($C_4$-$C_{12}$)-Cycloalkylthio-($C_1$-$C_4$)- alkyl,($C_4$-$C_{12}$)-Cycloalkylsulfinyl-($C_1$-$C_4$)-alkyl,($C_4$-$C_{12}$)-Cycloalkylsulfonyl-($C_1$-$C_4$)-alkyl,($C_4$-$C_{12}$)-Cycloalkylamino-($C_1$-$C_4$)-alkyl, ($C_4$-$C_{12}$)-Cycloalkylsulfonyloxy-($C_1$-$C_4$)-alkyl, ($C_4$-$C_{12}$)-Cycloalkyl-sulfonylamino-($C_1$-$C_4$)-alkyl, ($C_4$-$C_{12}$)-Cycloalkylcarbonyl-($C_1$-$C_4$)-alkyl, ($C_4$-$C_{12}$)-Cycloalkylcarbonyloxy-($C_1$-$C_4$)-alkyl, ($C_4$-$C_{12}$)-Cycloalkoxycarbonyl-($C_1$-$C_4$)-alkyl, ($C_4$-$C_{12}$)-Cycloalkylcarbonylamino-($C_1$-$C_4$)-alkyl, ($C_4$-$C_{12}$)-Cycloalkylaminocarbonyl-($C_1$-$C_4$)-alkyl, Arylthio-($C_1$-$C_4$)-alkyl, Arylsulfinyl-($C_1$-$C_4$)-alkyl, Arylsulfonyl-($C_1$-$C_4$)-alkyl, Arylamino-($C_1$-$C_4$)-alkyl, Arylsulfonyloxy-($C_1$-$C_4$)-alkyl, Arylsulfonylamino-($C_1$-$C_4$)-alkyl, Arylcarbonyl-($C_1$-$C_4$)-alkyl, Arylcarbonyloxy-($C_1$-$C_4$)-alkyl, Aryloxycarbonyl-($C_1$-$C_4$)-alkyl, Arylcarbonylamino-($C_1$-$C_4$)-alkyl, Arylaminocarbonyl-($C_1$-$C_4$)-alkyl, Heteroarylthio-($C_1$-$C_4$)-alkyl, Heteroarylsulfinyl-($C_1$-$C_4$)-alkyl, Heteroarylsulfonyl-($C_1$-$C_4$)-alkyl, Heteroarylamino-($C_1$-$C_4$)-alkyl, Heteroarylsulfonyloxy-($C_1$-$C_4$)-alkyl, Heteroarylsulfonylamino-($C_1$-$C_4$)-alkyl, Heteroarylcarbonyl-($C_1$-$C_4$)-alkyl, Heteroarylcarbonyloxy-($C_1$-$C_4$)-alkyl, Heteroaryloxycarbonyl-($C_1$-$C_4$)-alkyl, Heteroarylcarbonylamino-($C_1$-$C_4$)-alkyl, Heteroarylaminocarbonyl-($C_1$-$C_4$)-alkyl, Heterocyclylthio-($C_1$-$C_4$)-alkyl, Heterocyclylsulfinyl-($C_1$-$C_4$)-alkyl, Heterocyclylsulfonyl-($C_1$-$C_4$)-alkyl, Heterocyclylamino-($C_1$-$C_4$)-alkyl, Heterocyclylsulfonyloxy-($C_1$-$C_4$)-alkyl, Heterocyclylsulfonylamino-($C_1$-$C_4$)-alkyl, Heterocyclylcarbonyl-($C_1$-$C_4$)-alkyl, Heterocyclylcarbonyloxy-($C_1$-$C_4$)-alkyl, Heterocyclyloxycarbonyl-($C_1$-$C_4$)-alkyl, Heterocyclylcarbonylamino-($C_1$-$C_4$)-alkyl, Heterocyclylaminocarbonyl-($C_1$-$C_4$)-alkyl, Halogen-($C_1$-$C_4$)-alkylthio-($C_1$-$C_4$)-alkyl, Halogen-($C_1$-$C_4$)-alkylsulfinyl-($C_1$-$C_4$)-alkyl, Halogen-($C_1$-$C_4$)-alkylsulfonyl-($C_1$-$C_4$)-alkyl, Halogen-($C_1$-$C_4$)-alkylamino-($C_1$-$C_4$)-alkyl, Halogen-($C_1$-$C_4$)-alkylsulfonyloxy-($C_1$-$C_4$)-alkyl, Halogen-($C_1$-$C_4$)-alkylsulfonylamino-($C_1$-$C_4$)-alkyl, Halogen-($C_1$-$C_4$)-alkylcarbonyl-($C_1$-$C_4$)-alkyl, Halogen-($C_1$-$C_4$)-alkylcarbonyloxy-($C_1$-$C_4$)-alkyl, Halogen-($C_1$-$C_4$)-alkyloxycarbonyl-($C_1$-$C_4$)-alkyl, Halogen-($C_1$-$C_4$)-alkylcarbonylamino-($C_1$-$C_4$)-alkyl, Halogen-($C_1$-$C_4$)-alkylaminocarbonyl-($C_1$-$C_4$)-alkyl, Aryl-($C_1$-$C_4$)-alkylthio-($C_1$-$C_4$)-alkyl, Aryl-($C_1$-$C_4$)-alkylsulfinyl-($C_1$-$C_4$)-alkyl, Aryl-($C_1$-$C_4$)-alkylsulfonyl-($C_1$-$C_4$)-alkyl, Aryl-($C_1$-$C_4$)-alkylamino-($C_1$-$C_4$)-alkyl, Aryl-($C_1$-$C_4$)-alkylsulfonyloxy-($C_1$-$C_4$)-alkyl, Aryl-($C_1$-$C_4$)-alkylsulfonylamino-($C_1$-$C_4$)-alkyl, Aryl-($C_1$-$C_4$)-alkylcarbonyl-($C_1$-$C_4$)-alkyl, Aryl-($C_1$-$C_4$)-alkylcarbonyloxy-($C_1$-$C_4$)-alkyl, Aryl-($C_1$-$C_4$)-alkyloxycarbonyl-($C_1$-$C_4$)-alkyl, Aryl-($C_1$-$C_4$)-alkylcarbonylamino-($C_1$-$C_4$)-alkyl, Aryl-($C_1$-$C_4$)-alkylaminocarbonyl-($C_1$-$C_4$)-alkyl, Heteroaryl-($C_1$-$C_4$)-alkylthio-($C_1$-$C_4$)-alkyl, Heteroaryl-($C_1$-$C_4$)-alkylsulfinyl-($C_1$-$C_4$)-alkyl, Heteroaryl-($C_1$-$C_4$)-alkylsulfonyl-($C_1$-$C_4$)-alkyl, Heteroaryl-($C_1$-$C_4$)-alkylamino-($C_1$-$C_4$)-alkyl, Heteroaryl-($C_1$-$C_4$)-alkylsulfonylo-

xy-($C_1$-$C_4$)-alkyl, Heteroaryl-($C_1$-$C_4$)-alkylsulfonylamino-($C_1$-$C_4$)-alkyl, Heteroaryl-($C_1$-$C_4$)-alkylcarbonyl)-($C_1$-$C_4$)-alkyl, Heteroaryl-($C_1$-$C_4$)-alkylcarbonyloxy-($C_1$-$C_4$)-alkyl, Heteroaryl-($C_1$-$C_4$)-alkoxycarbonyl-($C_1$-$C_4$)-alkyl, Heteroaryl-($C_1$-$C_4$)-alkylcarbonylamino-($C_1$-$C_4$)-alkyl, Heteroaryl-( $C_1$-$C_4$)-alkylaminocarbonyl-($C_1$-$C_4$)-alkyl, Heterocyclyl-($C_1$-$C_4$)-alkylthio-($C_1$-$C_4$)-alkyl, Heterocyclyl-($C_1$-$C_4$)-alkylsulfinyl-($C_1$-$C_4$)-alkyl, Heterocyclyl-($C_1$-$C_4$)-alkylsulfonyl-($C_1$-$C_4$)-alkyl, Heterocyclyl-($C_1$-$C_4$)-alkylamino-($C_1$-$C_4$)-alkyl, Heterocyclyl-($C_1$-$C_4$)-alkylsulfonyloxy-($C_1$-$C_4$)-alkyl, Heterocyclyl-($C_1$-$C_4$)-alkylsulfonylamino-($C_1$-$C_4$)-alkyl, Heterocyclyl-($C_1$-$C_4$)-alkylcarbonyl-($C_1$-$C_4$)-alkyl, Heterocyclyl-($C_1$-$C_4$)-alkylcarbonyloxy-($C_1$-$C_4$)-alkyl, Heterocyclyl-($C_1$-$C_4$)-alkoxycarbonyl-($C_1$-$C_4$)-alkyl, Heterocyclyl-($C_1$-$C_4$)-alkylcarbonylamino-($C_1$-$C_4$)-alkyl, Heterocyclyl-($C_1$-$C_4$)-alkylcarbonylamino-($C_1$-$C_4$)-alkyl, Heterocyclyl-($C_1$-$C_4$)-alkylaminocarbonyl-($C_1$-$C_4$)-alkyl.

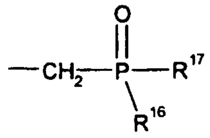 , 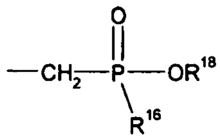 , 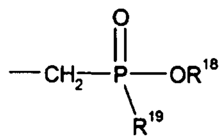

oder O-$(CH_2)_p$-O-$(CH_2)_w$-$R^{20}$;
Y O oder $NR^{26}$;
$R^1$ Halogen, Cyano, Nitro, $(Y)_n$-$S(O)_q$-$R^{28}$, $(Y)_n$-CO-$R^{15}$ oder **durch** v Halogenatome oder k ($C_1$-$C_4$)-Alkoxy-Gruppen substituiertes ($C_1$-$C_6$)-Alkyl, ($C_2$-$C_6$)-Alkenyl, ($C_2$-$C_6$)-Alkinyl oder ($C_1$-$C_4$)-Alkoxy;
$R^2$, $R^3$, $R^5$ und $R^7$ unabhängig voneinander Wasserstoff oder ($C_1$-$C_6$)-Alkyl;
$R^4$ Wasserstoff, **durch** k Reste aus der Gruppe Halogen, ($C_1$-$C_6$)-Alkylthio und ($C_1$-$C_6$)-Alkoxy substituiertes ($C_1$-$C_6$)-Alkyl, ($C_3$-$C_6$)-Cycloalkyl, Tetrahydropyranyl-3, Tetrahydropyranyl-4 oder Tetrahydrothiopyranyl-3;
$R^6$ Wasserstoff, ($C_1$-$C_6$)-Alkyl oder $CO_2R^{15}$, oder
$R^4$ und $R^6$ bilden gemeinsam eine Bindung oder einen drei- bis sechsgliedrigen carbocyclischen Ring;
$R^{15}$ ($C_1$-$C_4$)-Alkyl, Halogen-($C_1$-$C_4$)-alkyl oder $NR^{26}R^{27}$;
$R^{16}$ und $R^{17}$ unabhängig voneinander **durch** k Reste aus der Gruppe Halogen, Cyano, Nitro, ($C_1$-$C_6$)-Alkyl, Halogen-($C_1$-$C_6$)-alkyl, ($C_1$-$C_6$)-Alkoxy und Halogen-($C_1$-$C_6$)-alkoxy substituiertes ($C_1$-$C_6$)-Alkyl, ($C_2$-$C_6$)-Alkenyl, ($C_2$-$C_6$)-Alkinyl, Halogen-($C_1$-$C_6$)-alkyl, Aryl oder Aryl-($C_1$-$C_6$)-alkyl;
$R^{18}$ und $R^{19}$ unabhängig voneinander Wasserstoff oder $R^{16}$, oder
$R^{18}$ und $R^{19}$ bilden zusammen eine ($C_2$-$C_5$)-Alkenylkette;
$R^{20}$ ($C_1$-$C_4$)-Alkyl, ($C_2$-$C_8$)-Alkenyl, ($C_2$-$C_6$)-Alkinyl, Halogen-($C_1$-$C_6$)-alkyl, Halogen-($C_2$-$C_6$)-alkenyl, Halogen-($C_2$-$C_6$)-alkinyl, ($C_1$-$C_6$)-Alkoxy, ($C_2$-($C_6$)-Alkenyloxy, ($C_2$-$C_6$)-Alkinyloxy, Halogen-($C_1$-$C_6$)-alkoxy, Halogen-($C_2$-$C_6$)-alkinyloxy oder Halogen-($C_2$-$C_6$)-alkenyloxy;
$R^{26}$ Wasserstoff oder ($C_1$-$C_6$)-Alkyl;
$R^{27}$ Wasserstoff, ($C_1$-$C_6$)-Alkyl oder ($C_1$-$C_6$)-Alkoxy, oder
$R^{26}$ und $R^{27}$ bilden zusammen $(CH_2)_2$, $(CH_2)_3$. $(CH_2)_4$, $(CH_2)_5$, oder $(CH_2)_2O(CH_2)_2$;
$R^{28}$ ($C_1$-$C_4$)-Alkyl, Halogen-($C_1$-$C_4$)-alkyl oder $NR^{26}R^{27}$;
k 0,1, 2 oder 3;
n 0 oder 1;
p 1, 2 oder 3;
q 0, 1 oder 2;
v 0, 1, 2, 3, 4 oder 5;
w 0, 1, 2 oder 3 bedeuten,

und
B) mindestens einer Verbindung (Komponente B) aus der Gruppe

umfassend acetochlor, alachlor, atrazin, bromoxynil, carfentrazone-ethyl, diflufenzopyr, dimethenamid, flufenacet, flumetsulam, fluthiacet-methyl, halosulfuron, imazamox, imazapyr, imazaquin, imazethapyr, iodosulfuron, metolachlor, metosulam, metribuzin, nicosulfuron, pethoxamid, pendimethalin, primisulfuron, prosulfuron, pyridate, rimsulfuron, thenylchlor, thifensulfuron-methyl, tritosulfuron und N-[(4,6-Dimethoxy-pyrimidin-2-yl)-aminocarbonyl]-2-dimethylaminocarbonyl-5-formyl-benzolsulfonamid,
wobei diese Mittel die Verbindungen der Formel (I) oder deren Salze (Komponente A) und die Verbindungen der Gruppe B (Komponente B) in einem Gewichtsverhältnis von 1:2000 bis 2000:1 enthalten.

2. Herbizide Mittel nach Anspruch 1, **dadurch gekennzeichnet, daß** sie bromoxynil, diflufenzopyr, iodosulfuron, nicosulfuron, rimsulfuron oder N-[(4,6-Dimethoxy-pyrimidin-2-yl)-aminocarbonyl]-2-dimethylaminocarbonyl-5-formyl-benzolsulfonamid enthalten.

3. Herbizide Mittel nach Anspruch 1 oder 2, **dadurch gekennzeichnet, daß** das Gewichtsverhältnis A:B der kombinierten Herbizide A) und B) im Bereich von 1:20 bis 50:1 liegt.

4. Herbizide Mittel nach einem der Ansprüche 1 bis 3, **dadurch gekennzeichnet, daß** sie 0,1-99 Gew.-% Herbizide A) und B) und 99 bis 0,1 Gew.-% im Pflanzenschutz übliche Formulierungsmittel enthalten.

5. Verfahren zur Bekämpfung von unerwünschtem Pflanzenwuchs, **dadurch gekennzeichnet, daß** man ein oder mehrere Herbizide A) mit einem oder mehreren Herbiziden B) auf die Schadpflanzen, Pflanzenteile davon oder die Anbaufläche appliziert, wobei die Kombination der Herbzide A) und B) wie in einem der Ansprüche 1 bis 4 definiert ist.

6. Verwendung einer Kombination aus Herbiziden A) und B) als herbizides Mittel zur Bekämpfung von unerwünschtem Pflanzenwuchs, wobei die Kombination der Herbizide A) und B) wie in einem der Ansprüche 1 bis 4 definiert ist.

**Claims**

1. A herbicidal composition, comprising an effective amount of

A) at least one compound of formula (I) and its agriculturally customary salts (Component A)

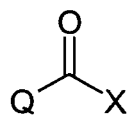

(I),

in which

X is the radical $X^1$

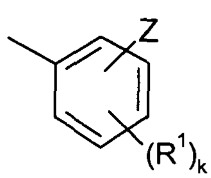

($X^1$)

Q is the radical $Q^1$

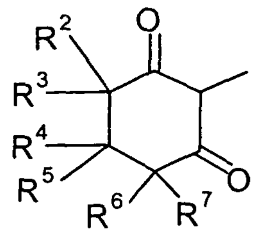

($Q^1$)

Z is a radical $Z^1$, $CH_2$-$Z^1$ or $Z^2$;

$Z^1$ is a five- to ten-membered monocyclic or bicyclic saturated, partially saturated, fully unsaturated or aromatic ring which is attached via carbon or nitrogen and which, in addition to carbon atoms, contains 1, 2, 3 or 4 heteroatoms from the group consisting of oxygen, sulfur and nitrogen and which is unsubstituted or mono- or polysubstituted by halogen, cyano, nitro, cyano-($C_1$-$C_4$)-alkyl, CO-$R^{15}$, ($C_1$-$C_4$)-alkyl, halo-($C_1$-$C_4$)-alkyl, ($C_3$-$C_8$)-cycloalkyl, ($C_1$-$C_4$)-alkoxy, halo-($C_1$-$C_4$)-alkoxy, ($C_1$-$C_4$)-alkylthio, halo-($C_1$-$C_4$)-alkylthio, di-($C_1$-$C_4$)-alkylamino, by phenyl which is unsubstituted or mono- or polysubstituted by halogen, cyano, nitro, ($C_1$-$C_4$)-alkyl or halo-($C_1$-$C_4$)-alkyl or by an oxo group;

$Z^2$ is ($C_3$-$C_{12}$)-cycloalkyloxy-($C_1$-$C_4$)-alkyl, aryloxy-($C_1$-$C_4$)-alkyl, heteroaryloxy-($C_1$-$C_4$)-alkyl, heterocyclyl-($C_1$-$C_4$)-alkyl, halo-($C_1$-$C_4$)-alkoxy-($C_1$-$C_4$)-alkyl, aryl-($C_1$-$C_4$)-alkoxy-($C_1$-$C_4$)-alkyl, heteroaryl-($C_1$-$C_4$)-alkoxy-($C_1$-$C_4$)-alkyl, heterocyclyl-($C_1$-$C_4$)-alkoxy-($C_1$-$C_4$)-alkyl, aryl-($C_3$-$C_8$)-cycloalkylthio-($C_1$-$C_4$)-alkyl, heteroaryl-($C_3$-$C_8$)-cydoalkylthio-($C_1$-$C_4$)-alkyl, heterocyclyl-($C_3$-$C_8$)-cycloalkylthio-($C_1$-$C_4$)-alkyl, ($C_3$-$C_8$)-cycloalkylsulfinyl-($C_1$-$C_4$)-alkyl, ($C_3$-$C_8$)-cycloalkylsulfonyl-($C_1$-$C_4$)-alkyl, ($C_3$-$C_8$)-cycloalkylamino-($C_1$-$C_4$)-alkyl, ($C_3$-$C_8$)-cycloalkylsulfonyloxy-($C_1$-$C_4$)-alkyl, ($C_3$-$C_8$)-cycloalkylsulfonylamino-($C_1$-$C_4$)-alkyl, ($C_3$-$C_8$)-cycloalkylcarbonyl-($C_1$-$C_4$)-alkyl, ($C_3$-$C_8$)-cycloalkylcarbonyloxy-($C_1$-$C_4$)-alkyl, ($C_3$-$C_8$)-cycloalkoxycarbonyl-($C_1$-$C_4$)-alkyl,($C_3$-$C_8$)-cycloalkylcarbonylamino-($C_1$-$C_4$)-alkyl,($C_3$-$C_8$)-cycloalkylaminocarbonyl-($C_1$-$C_4$)-alkyl, ($C_4$-$C_{12}$)-cycloalkyl-($C_1$-$C_4$)-alkyl, ($C_4$-$C_{12}$)-cycloalkylthio-($C_1$-$C_4$)-alkyl, ($C_4$-$C_{12}$)-cycloalkylsulfinyl-($C_1$-$C_4$)-alkyl, ($C_4$-$C_{12}$)-cycloalkylsulfonyl-($C_1$-$C_4$)-alkyl, ($C_4$-$C_{12}$)-cycloalkylamino-($C_1$-$C_4$)-alkyl, ($C_4$-$C_{12}$)-cycloalkylsulfonyloxy-($C_1$-$C_4$)-alkyl, ($C_4$-$C_{12}$)-cycloalkylsulfonylamino-($C_1$-$C_4$)-alkyl, ($C_4$-$C_{12}$)-cycloalkylcarbonyl-($C_1$-$C_4$)-alkyl, ($C_4$-$C_{12}$)-cycloalkylcarbonyloxy-($C_1$-$C_4$)-alkyl, ($C_4$-$C_{12}$)-cycloalkoxycarbonyl-($C_1$-$C_4$)-alkyl, ($C_4$-$C_{12}$)-cycloalkylcarbonylamino-($C_1$-$C_4$)-alkyl, ($C_4$-$C_{12}$)-cycloalkylaminocarbonyl-($C_1$-$C_4$)-alkyl, arylthio-($C_1$-$C_4$)-alkyl, arylsulfinyl-($C_1$-$C_4$)-alkyl, arylsulfonyl-($C_1$-$C_4$)-alkyl, arylamino-($C_1$-$C_4$)-alkyl, arylsulfonyloxy-($C_1$-$C_4$)-alkyl, arylsulfonylamino-($C_1$-$C_4$)-alkyl, arylcarbonyl-($C_1$-$C_4$)-alkyl, arylcarbonyloxy-($C_1$-$C_4$)-alkyl, aryloxycarbonyl-($C_1$-$C_4$)-alkyl, arylcarbonylamino-($C_1$-$C_4$)-alkyl, arylaminocarbonyl-($C_1$-$C_4$)-alkyl, heteroarylthio-($C_1$-$C_4$)-alkyl, heteroarylsulfinyl-($C_1$-$C_4$)-alkyl, heteroarylsulfonyl-($C_1$-$C_4$)-alkyl, heteroarylamino-($C_1$-$C_4$)-alkyl, heteroarylsulfonyloxy-($C_1$-$C_4$)-alkyl, heteroarylsulfonylamino-($C_1$-$C_4$)-alkyl, heteroarylcarbonyl-($C_1$-$C_4$)-alkyl, heteroarylcarbonyloxy-($C_1$-$C_4$)-alkyl, heteroaryloxycarbonyl-($C_1$-$C_4$)-alkyl, heteroarylcarbonylamino-($C_1$-$C_4$)-alkyl, heteroarylaminocarbonyl-($C_1$-$C_4$)-alkyl, heterocyclylthio-($C_1$-$C_4$)-alkyl, heterocyclylsulfinyl-($C_1$-$C_4$)-alkyl, heterocyclylsulfonyl-($C_1$-$C_4$)-alkyl, heterocyclylamino-($C_1$-$C_4$)-alkyl, heterocyclylsulfonyloxy-($C_1$-$C_4$)-alkyl, heterocydylsulfonylamino-($C_1$-$C_4$)-alkyl, heterocydylcarbonyl-($C_1$-$C_4$)-alkyl, heterocydylcarbonyloxy-($C_1$-$C_4$)-alkyl, heterocydyloxycarbonyl-($C_1$-$C_4$)-alkyl, heterocyclylcarbonylamino-($C_1$-$C_4$)-alkyl, heterocydylaminocarbonyl-($C_1$-$C_4$)-alkyl, halo-($C_1$-$C_4$)-alkylthio-($C_1$-$C_4$)-alkyl, halo-($C_1$-$C_4$)-alkylsulfinyl-($C_1$-$C_4$)-alkyl, halo-($C_1$-$C_4$)-alkylsulfonyl-($C_1$-$C_4$)-alkyl, halo-($C_1$-$C_4$)-alkylamino-($C_1$-$C_4$)-alkyl, halo-($C_1$-$C_4$)-alkylsulfonyloxy-($C_1$-$C_4$)-alkyl, halo-($C_1$-$C_4$)-alkylsulfonylamino-($C_1$-$C_4$)-alkyl, halo-($C_1$-$C_4$)-alkylcarbonyl-($C_1$-$C_4$)-alkyl, halo-($C_1$-$C_4$)-alkylcarbonyloxy-($C_1$-$C_4$)-alkyl, halo-($C_1$-$C_4$)-alkyloxycarbonyl-($C_1$-$C_4$)-alkyl, halo-($C_1$-$C_4$)-alkylcarbonylamino-($C_1$-$C_4$)-alkyl, halo-($C_1$-$C_4$)-alkylaminocarbonyl-($C_1$-$C_4$)-alkyl, aryl-($C_1$-$C_4$)-alkylthio-($C_1$-$C_4$)-alkyl, aryl-($C_1$-$C_4$)-alkylsulfinyl-($C_1$-$C_4$)-alkyl, aryl-($C_1$-$C_4$)-alkylsulfonyl-($C_1$-$C_4$)-alkyl, aryl-($C_1$-$C_4$)-alkylamino-($C_1$-$C_4$)-alkyl, aryl-($C_1$-$C_4$)-alkylsulfonyloxy-($C_1$-$C_4$)-alkyl, aryl-($C_1$-$C_4$)-alkylsulfonylamino-($C_1$-$C_4$)-alkyl, aryl-($C_1$-$C_4$)-alkylcarbonyl-($C_1$-$C_4$)-alkyl,aryl-($C_1$-$C_4$)-alkylcarbonyloxy-($C_1$-$C_4$)-alkyl,aryl-($C_1$-$C_4$)-alkyloxycarbonyl-($C_1$-$C_4$)-alkyl, aryl-($C_1$-$C_4$)-alkylcarbonylamino-($C_1$-$C_4$)-alkyl, aryl-($C_1$-$C_4$)-alkylaminocarbonyl-($C_1$-$C_4$)-alkyl, heteroaryl-($C_1$-$C_4$)-alkylthio-($C_1$-$C_4$)-alkyl, heteroaryl-($C_1$-$C_4$)-alkylsulfinyl-($C_1$-$C_4$)-alkyl, heteroaryl-($C_1$-$C_4$)-alkylsulfonyl-($C_1$-$C_4$)-alkyl, heteroaryl-($C_1$-$C_4$)-alkylamino-($C_1$-$C_4$)-alkyl, heteroaryl-($C_1$-$C_4$)-alkylsulfonyloxy-($C_1$-$C_4$)-alkyl, heteroaryl-($C_1$-$C_4$)-alkylsulfonylamino-($C_1$-$C_4$)-alkyl, heteroaryl-($C_1$-

$C_4$)-alkylcarbonyl-($C_1$-$C_4$)-alkyl, heteroaryl-($C_1$-$C_4$)-alkylcarbonyloxy-($C_1$-$C_4$)-alkyl, heteroaryl-($C_1$-$C_4$)-alkoxycarbonyl-($C_1$-$C_4$)-alkyl, heteroaryl-($C_1$-$C_4$)-alkylcarbonylamino-($C_1$-$C_4$)-alkyl, heteroaryl-($C_1$-$C_4$)-alkylaminocarbonyl-($C_1$-$C_4$)-alkyl, heterocydyl-($C_1$-$C_4$)-alkylthio-($C_1$-$C_4$)-alkyl, heterocyclyl-($C_1$-$C_4$)-alkylsulfinyl-($C_1$-$C_4$)-alkyl, heterocyclyl-($C_1$-$C_4$)-alkylsulfonyl-($C_1$-$C_4$)-alkyl, heterocyclyl-($C_1$-$C_4$)-alkylamino-($C_1$-$C_4$)-alkyl, heterocyclyl-($C_1$-$C_4$)-alkylsulfonyloxy-($C_1$-$C_4$)-alkyl, heterocyclyl-($C_1$-$C_4$)-alkylsulfonylamino-($C_1$-$C_4$)-alkyl, heterocyclyl-($C_1$-$C_4$)-alkylcarbonyl-($C_1$-$C_4$)-alkyl, heterocyclyl-($C_1$-$C_4$)-alkylcarbonyloxy-($C_1$-$C_4$)-alkyl, heterocyclyl-($C_1$-$C_4$)-alkoxycarbonyl-($C_1$-$C_4$)-alkyl, heterocyclyl-($C_1$-$C_4$)-alkylcarbonylamino-($C_1$-$C_4$)-alkyl, heterocyclyl-($C_1$-$C_4$)-alkylcarbonylamino-($C_1$-$C_4$)-alkyl, heterocyclyl-($C_1$-$C_4$)-alkylaminocarbonyl-($C_1$-$C_4$)-alkyl,

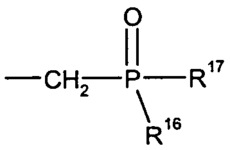 , 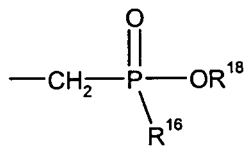 , 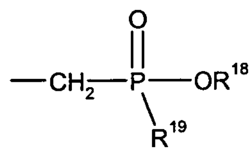

or O-$(CH_2)_p$-O-$(CH_2)_w$-$R^{20}$ ;

Y is O or $NR^{26}$;

$R^1$ is halogen, cyano, nitro, $(Y)_n$-$S(O)_q$-$R^{28}$, $(Y)_n$-CO-$R^{15}$ or is ($C_1$-$C_6$)-alkyl, ($C_2$-$C_6$)-alkenyl, ($C_2$-$C_6$)-alkynyl or ($C_1$-$C_4$)-alkoxy which are substituted by v halogen atoms or k ($C_1$-$C_4$)-alkoxy groups;

$R^2$, $R^3$, $R^5$ and $R^7$ independently of one another are hydrogen or ($C_1$-$C_6$)-alkyl;

$R^4$ is hydrogen, or is ($C_1$-$C_6$)-alkyl, ($C_3$-$C_6$)-cycloalkyl, tetrahydropyran-3-yl, tetrahydropyran-4-yl or tetrahydrothiopyran-3-yl which are substituted by k radicals from the group consisting of halogen, ($C_1$-$C_6$)-alkylthio and ($C_1$-$C_6$)-alkoxy;

$R^6$ is hydrogen, ($C_1$-$C_6$)-alkyl or $CO_2R^{15}$, or

$R^4$ and $R^6$ together form a bond or a three- to six-membered carbocyclic ring;

$R^{15}$ is ($C_1$-$C_4$)-alkyl, halo-($C_1$-$C_4$)-alkyl or $NR^{26}R^{27}$;

$R^{16}$ and $R^{17}$ independently of one another are ($C_1$-$C_6$)-alkyl, ($C_2$-$C_6$)-alkenyl, ($C_2$-$C_6$)-alkynyl, halo-($C_1$-$C_6$)-alkyl, aryl or aryl-($C_1$-$C_6$)-alkyl which are substituted by k radicals from the group consisting of halogen, cyano, nitro, ($C_1$-$C_6$)-alkyl, halo-($C_1$-$C_6$)-alkyl, ($C_1$-$C_6$)-alkoxy and halo-($C_1$-$C_6$)-alkoxy;

$R^{18}$ and $R^{19}$ independently of one another are hydrogen or $R^{16}$, or

$R^{18}$ and $R^{19}$ together form a ($C_2$-$C_5$)-alkenyl chain;

$R^{20}$ is ($C_1$-$C_4$)-alkyl, ($C_2$-$C_8$)-alkenyl, ($C_2$-$C_6$)-alkynyl, halo-($C_1$-$C_6$)-alkyl, halo-($C_2$-$C_6$)-alkenyl, halo-($C_2$-$C_6$)-alkynyl, ($C_1$-$C_6$)-alkoxy, ($C_2$-$C_6$)-alkenyloxy, ($C_2$-$C_6$)-alkynyloxy, halo-($C_1$-$C_6$)-alkoxy, halo-($C_2$-$C_6$)-alkynyloxy or halo-($C_2$-$C_6$)-alkenyloxy;

$R^{26}$ is hydrogen or ($C_1$-$C_6$)-alkyl;

$R^{27}$ is hydrogen, ($C_1$-$C_6$)-alkyl or ($C_1$-$C_6$)-alkoxy, or

$R^{26}$ and $R^{27}$ together form $(CH_2)_2$. $(CH_2)_3$, $(CH_2)_4$, $(CH_2)_5$, or $(CH_2)_2O(CH_2)_2$;

$R^{28}$ is ($C_1$-$C_4$)-alkyl, halo-($C_1$-$C_4$)-alkyl or $NR^{26}R^{27}$;

k is 0,1, 2 or 3;

n is 0 or 1;

p is 1, 2 or 3;

q is 0, 1 or 2;

v is 0, 1, 2, 3, 4 or 5;

w is 0, 1, 2 or 3,

and

B) at least one compound (Component B) from the group

comprising

acetochlor, alachlor, atrazine, bromoxynil, carfentrazone-ethyl, diflufenzopyr, dimethenamid, flufenacet, flumetsulam, fluthiacet-methyl, halosulfuron, imazamox, imazapyr, imazaquin, imazethapyr, iodosulfuron, metolachlor, metosulam, metribuzin, nicosulfuron, pethoxamid, pendimethalin, primisulfuron, prosulfuron, pyridate, rimsulfuron, thenylchlor, thifensulfuron-methyl, tritosulfuron and N-[(4,6-dimethoxypyrimidin-2-yl)-aminocarbonyl]-2-dimethylaminocarbonyl-5-formylbenzenesulfonamide,

where this composition comprises the compounds of the formula (I) or their salts (Component A) and the compounds of group B (Component B) in a ratio by weight of from 1:2000 to 2000:1.

**2.** A herbicidal composition as claimed in claim 1, which comprises bromoxynil, diflufenzopyr, iodosulfuron, nicosulfuron, rimsulfuron or N-[(4,6-dimethoxypyrimidin-2-yl)-aminocarbonyl]-2-dimethylaminocarbonyl-5-formylbenzenesulfonamide.

**3.** A herbicidal composition as claimed in claim 1 or 2, wherein the ratio by weight A:B of the combined herbicides A) and B) is in the range from 1:20 to 50:1.

**4.** A herbicidal composition as claimed in any of claims 1 to 3, which comprises 0.1-99% by weight of herbicides A) and B) and 99 to 0.1 % by weight of formulation auxiliaries which are customary in crop protection.

**5.** A method for controlling undesirable vegetation, which comprises applying one or more herbicides A) with one or more herbicides B) to the harmful plants, to parts thereof or to the area under cultivation, where the combination of the herbicides A) and B) is defined as in any of claims 1 to 4.

**6.** The use of a combination of herbicides A) and B) as herbicidal composition for controlling undesirable vegetation, where the combination of the herbicides A) and B) is defined as in any of claims 1 to 4.

## Revendications

**1.** Agent herbicide, **caractérisé par** une teneur efficace en

A) au moins un composé de formule générale (I) ainsi que ses sels usuels en agriculture (Composant A)

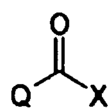

(I),

dans laquelle

**X** représente le radical $X^1$

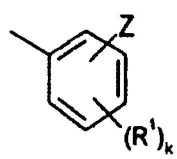

($X^1$)

Q représente le radical $Q^1$

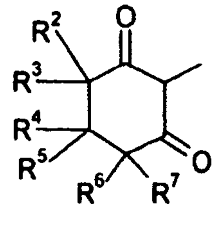

**($Q^1$)**

Z représente un radical $Z^1$, $CH_2$-$Z^1$ ou $Z^2$ ;

$Z^1$ est un cycle de 5 à 10 chaînons relié par un atome de carbone ou d'azote monocyclique ou bicyclique saturé, partiellement saturé, complètement insaturé ou aromatique, qui contient au côté d'atomes de carbone 1, 2, 3 ou 4 hétéroatomes pris dans le groupe des atomes d'oxygène, de soufre et d'azote et qui est non substitué ou substitué une ou plusieurs fois par un substituant halogène, cyano, nitro, cyanoalkyle en $C_1$-$C_4$, CO-$R^{15}$, alkyle en $C_1$-$C_4$, halogénoalkyle en $C_1$-$C_4$, cycloalkyle en $C_3$-$C_8$, alkoxy en $C_1$-$C_4$, halogénoalkoxy en $C_1$-$C_4$, (alkyl en $C_1$-$C_4$) thio, halogéno (alkyl en $C_1$-$C_4$) thio, di (alkyl en $C_1$-$C_4$)amino, phényle non substitué ou substitué une ou plusieurs fois par un substituant halogène, cyano, nitro, alkyle en $C_1$-$C_4$ ou halogénoalkyle en $C_1$-$C_4$ ou un groupe oxo ;

$Z^2$ représente un groupe (cycloalkyloxy en $C_3$-$C_{12}$)-alkyle en $C_1$-$C_4$, aryloxy-alkyle en $C_1$-$C_4$, hétéroaryloxyalkyle en $C_1$-$C_4$, hétérocyclylalkyle en $C_1$-$C_4$, halogéno (alkoxy en $C_1$-$C_4$) -alkyle en $C_1$-$C_4$, aryl-(alkoxy en $C_1$-$C_4$) -alkyle en $C_1$-$C_4$, hétéroaryl(alkoxy en $C_1$-$C_4$)-alkyle en $C_1$-$C_4$, hétérocyclyl-(alkoxy en $C_1$-$C_4$) -alkyle en $C_1$-$C_4$, aryl- (cycloalkyl en $C_3$-$C_8$)thio-alkyle en $C_1$-$C_4$, hétéroaryl-(cycloalkyl en $C_3$-$C_8$) thio-alkyle en $C_1$-$C_4$, hétérocyclyl- (cycloalkyl en $C_3$-$C_8$)thioalkyle en $C_1$-$C_4$, (cycloalkyl en $C_3$-$C_8$) sulfinyl-alkyle en $C_1$-$C_4$, cyclo (alkyl en $C_3$-$C_8$) sulfonyl-alkyle en $C_1$-$C_4$, (cycloalkyl en $C_3$-$C_8$) amino-alkyle en $C_1$-$C_4$, cyclo (alkyl en $C_3$-$C_8$) -sulfonyloxy-alkyle en $C_1$-$C_4$, cyclo (alkyl en $C_3$-$C_8$) sulfonylamino-alkyle en $C_1$-$C_4$, cyclo (alkyl en $C_3$-$C_8$) carbonylalkyle en $C_1$-$C_4$, cyclo (alkyl en $C_3$-$C_8$)carbonyloxyalkyle en $C_1$-$C_4$, cyclo (alkoxy en $C_3$-$C_8$) carbonylalkyle en $C_1$-$C_4$, cyclo(alkyl en $C_3$-$C_8$)-carbonylaminoalkyle en $C_1$-$C_4$, cyclo (alkyl en $C_3$-$C_8$) aminocarbonylalkyle en $C_1$-$C_4$, cyclo (alkyl en $C_4$-$C_{12}$) -alkyle en $C_1$-$C_4$, cyclo (alkyl en $C_4$-$C_{12}$) -thio-alkyle en $C_1$-$C_4$, cyclo (alkyl en $C_4$-$C_{12}$) sulfinylalkyle en $C_1$-$C_4$, cyclo (alkyl en $C_4$-$C_{12}$) sulfonyl-alkyle en $C_1$-$C_4$, cyclo (alkyl en $C_4$-$C_{12}$) aminoalkyle en $C_1$-$C_4$, cyclo (alkyl en $C_4$-$C_{12}$) sulfonyloxyalkyle en $C_1$-$C_4$, cyclo (alkyl en $C_4$-$C_{12}$)sulfonylaminoalkyle en $C_1$-$C_4$, cyclo (alkyl en $C_4$-$C_{12}$) carbonylalkyle en $C_1$-$C_4$, cyclo (alkyl en $C_4$-$C_{12}$) carbonyloxyalkyle en $C_1$-$C_4$, cyclo (alkoxy en $C_4$-$C_{12}$) carbonylalkyle en $C_1$-$C_4$, cyclo (alkyl en $C_4$-$C_{12}$) carbonylaminoalkyle en $C_1$-$C_4$, cyclo (alkyl en $C_4$-$C_{12}$) aminocarbonylalkyle en $C_1$-$C_4$, arylthio-alkyle en $C_1$-$C_4$, arylsulfinyl-alkyle en $C_1$-$C_4$, arylsulfonylalkyle en $C_1$-$C_4$, arylamino-alkyle en $C_1$-$C_4$, arylsulfonyloxy-alkyle en $C_1$-$C_4$, aryl-sulfonylaminoalkyle en $C_1$-$C_4$, arylcarbonyl-alkyle en $C_1$-$C_4$, arylcarbonyloxyalkyle en $C_1$-$C_4$, aryloxycarbonylalkyle en $C_1$-$C_4$, arylcarbonyl-aminoalkyle en $C_1$-$C_4$, arylaminocarbonylalkyle en $C_1$-$C_4$, hétéroarylthioalkyle en $C_1$-$C_4$, hétéroarylsulfinylalkyle en $C_1$-$C_4$, hétéroaryl-sulfonylalkyle en $C_1$-$C_4$, hétéroaryl-aminoalkyle en $C_1$-$C_4$, hétéroarylsulfonyloxy-alkyle en $C_1$-$C_4$, hétéroarylsulfonylaminoalkyle en $C_1$-$C_4$, hétéroarylcarbonylalkyle en $C_1$-$C_4$, hétéroarylcarbonyloxyalkyle en $C_1$-$C_4$, hétéroaryloxycarbonylalkyle en $C_1$-$C_4$, hétéroarylcarbonylaminoalkyle en $C_1$-$C_4$, hétéroarylaminocarbonylalkyle en $C_1$-$C_4$, hétérocyclylthioalkyle en $C_1$-$C_4$, hétérocyclylsulfinylalkyle en $C_1$-$C_4$, hétérocyclylsulfonylalkyle en $C_1$-$C_4$, hétérocyclylaminoalkyle en $C_1$-$C_4$, hétérocyclylsulfonyloxyalkyle en $C_1$-$C_4$, hétérocyclylsulfonylaminoalkyle en $C_1$-$C_4$, hétérocyclylcarbonyl-alkyle en $C_1$-$C_4$, hétérocyclylcarbonyloxyalkyle en $C_1$-$C_4$, hétérocyclyloxycarbonylalkyle en $C_1$-$C_4$, hétérocyclylcarbonylamino-alkyle en $C_1$-$C_4$, hétérocyclylaminocarbonylalkyle en $C_1$-$C_4$, halogéno (alkyl en $C_1$-$C_4$) thio-alkyle en $C_1$-$C_4$, halogéno (alkyl en $C_1$-$C_4$) -sulfinylalkyle en $C_1$-$C_4$, halogéno (alkyl en $C_1$-$C_4$) sulfonyl-alkyle en $C_1$-$C_4$, halogéno (alkyl en $C_1$-$C_4$) amino-alkyle en $C_1$-$C_4$ , halogéno(alkyl en $C_1$-$C_4$) sulfonyloxyalkyle en $C_1$-$C_4$, halogéno(alkyl en $C_1$-$C_4$) sulfonylamino-alkyle en $C_1$-$C_4$, halogéno-(alkyl en $C_1$-$C_4$) carbonylalkyle en $C_1$-$C_4$, halogéno (alkyl en $C_1$-$C_4$) carbonyloxyalkyle en $C_1$-$C_4$, halogéno (alkyl en $C_1$-$C_4$) oxycarbonyl-alkyle en $C_1$-$C_4$, halogéno (alkyl en $C_1$-$C_4$) carbonyl-aminoalkyle en $C_1$-$C_4$, halogéno (alkyl en $C_1$-$C_4$) aminocarbonylalkyle en $C_1$-$C_4$, aryl-(alkyl en $C_1$-$C_4$) thio-alkyle en $C_1$-$C_4$ , aryl(alkyl en $C_1$-$C_4$)sulfinyl-alkyle en $C_1$-$C_4$, aryl (alkyl en $C_1$-$C_4$) sulfonyl-alkyle en $C_1$-$C_4$, aryl- (alkyl en $C_1$-$C_4$) aminoalkyle en $C_1$-$C_4$, aryl- (alkyl en $C_1$-$C_4$) sulfonyloxy-alkyle en $C_1$-$C_4$, aryl (alkyl en $C_1$-$C_4$) sulfonylamino-alkyle en $C_1$-$C_4$, aryl- (alkyl en $C_1$-$C_4$)carbonyl-alkyle en $C_1$-$C_4$, aryl-(alkyl en $C_1$-$C_4$) carbonyloxy-alkyle en $C_1$-$C_4$, aryl- (alkyl en $C_1$-$C_4$) oxycarbonyl-alkyle en $C_1$-$C_4$, aryl- (alkyl en $C_1$-$C_4$) carbonylamino-alkyle en $C_1$-$C_4$, aryl-(alkyl en $C_1$-$C_4$) aminocarbonylalkyle en

$C_1$-$C_4$ , hétéro-aryl (alkyl en $C_1$-$C_4$) thio-alkyle en $C_1$-$C_4$, hétéroaryl-(alkyl en $C_1$-$C_4$) sulfinyl-alkyle en $C_1$-$C_4$, hétéroaryl- (alkyl en $C_1$-$C_4$) sulfonyl-alkyle en $C_1$-$C_4$, hétéroaryl- (alkyl en $C_1$-$C_4$) amino-alkyle en $C_1$-$C_4$, hétéroaryl-(alkyl en $C_1$-$C_4$) sulfonyloxyalkyle en $C_1$-$C_4$, hétéroaryl- (alkyl en $C_1$-$C_4$)-sulfonylamino-alkyle en $C_1$-$C_4$, hétéroaryl- (alkyl en $C_1$-$C_4$)carbonyl)-alkyle en $C_1$-$C_4$ , hétéroaryl-(alkyl en $C_1$-$C_4$ ) carbonyloxy-alkyle en $C_1$-$C_4$ , hétéroaryl-(alkoxy en $C_1$-$C_4$)carbonyl-alkyle en $C_1$-$C_4$, hétéroaryl- (alkyl en $C_1$-$C_4$) carbonylaminoalkyle en $C_1$-$C_4$, hétéroaryl- (alkyl en $C_1$-$C_4$)-aminocarbonyl-alkyle en $C_1$-$C_4$, hétérocyclyl-(alkyl en $C_1$-$C_4$) thio-alkyl en $C_1$-$C_4$, hétérocyclyl- (alkyl en $C_1$-$C_4$)sulfinyl-alkyle en $C_1$-$C_4$, , hétérocyclyl-(alkyl en $C_1$-$C_4$) sulfonyl-alkyle en $C_1$-$C_4$, hétérocyclyl(alkyl en $C_1$-$C_4$) -aminoalkyle en $C_1$-$C_4$, hétérocyclyl(alkyl en $C_1$-$C_4$)-sulfonyloxy-alkyle en $C_1$-$C_4$, hétérocyclyl-(alkyl en $C_1$-$C_4$) sulfonylaminoalkyle en $C_1$-$C_4$, hétérocyclyl- (alkyl en $C_1$-$C_4$)-carbonylalkyle en $C_1$-$C_4$, hétérocyclyl (alkyl en $C_1$-$C_4$) carbonyloxy-alkyle en $C_1$-$C_4$, hétérocyclyl-(alkoxy en $C_1$-$C_4$) carbonyl-alkyle en $C_1$-$C_4$, hétérocyclyl-(alkyl en $C_1$-$C_4$)carbonylamino-alkyle en $C_1$-$C_4$, hétéro-cyclyl-(alkyl en $C_1$-$C_4$)-carbonylamino-alkyle en $C_1$-$C_4$, hétérocyclyl-(alkyl en $C_1$-$C_4$)-amino-carbonyl-alkyle en $C_1$-$C_4$,

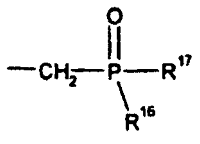 , 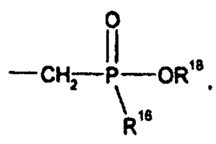 , 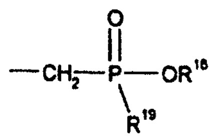

ou O-$(CH_2)_p$-O-$(CH_2)_w$-$R^{20}$;

Y représente O ou $NR^{26}$;

$R^1$ représente un atome d'halogène, un groupe cyano, nitro, $(Y)_n$-S $(O)_q$-$R^{28}$, $(Y)_n$-CO-$R^{15}$ ou un groupe alcényle en $C_2$-$C_6$, alcynyle en $C_2$-$C_6$, alkoxy en $C_1$-$C_4$ ou alkyle en $C_1$-$C_6$ substitué par v atomes d'halogène ou k groupes alkoxy en $C_1$-$C_4$ ;

$R^2$ $R^3$ $R^5$ et $R^7$ indépendamment les uns des autres représentent un atome d'hydrogène ou un groupe alkyle en $C_1$-$C_6$ ;

$R^4$ représente un atome d'hydrogène, un groupe cycloalkyle en $C_3$-$C_6$, alkyle en $C_1$-$C_6$ substitué par k radicaux pris dans le groupe constitué par un halogène, alkylthio en $C_1$-$C_6$ et alkoxy en $C_1$-$C_6$, tétrahydropyranyle-3, tétrahydropyranyle-4 ou tétrahydrothiopyranyle-3 ;

$R^6$ représente un atome d'hydrogène, un groupe alkyle en $C_1$-$C_6$ ou $CO^2R^{15}$, ou

$R^4$ et $R^6$ forment conjointement une liaison ou un cycle carbocyclique de 3 à 6 chaînons ;

$R^{15}$ représente un groupe alkyle en $C_1$-$C_4$, haloalkyle en $C_1$-$C_4$ ou $NR^{26}R^{27}$;

$R^{16}$ et $R^{17}$, indépendamment l'un de l'autre, représentent un groupe arylalkyle en $C_1$-$C_6$, aryle, haloalkyle en $C_1$-$C_6$, alcynyle en $C_2$-$C_6$, alcényle en $C_2$-$C_6$ ou alkyle en $C_1$-$C_6$ substitué par k radicaux choisis dans le groupe constitué par les halogène, cyano, nitro, alkyle en $C_1$-$C_6$, haloalkyle en $C_1$-$C_6$, alkoxy en $C_1$-$C_6$ et haloalkoxy en $C_1$-$C_6$ ;

$R^{18}$ et $R^{19}$, indépendamment l'un de l'autre, représentent un atome d'hydrogène ou $R^{16}$, ou

$R^{18}$ et $R^{19}$ forment conjointement une chaîne alcényle en $C_2$-$C_5$ ;

$R^{20}$ représente un groupe alkyle en $C_1$-$C_4$, alcényle en $C_2$-$C_8$, alcynyle en $C_2$-$C_6$, haloalkyle en $C_1$-$C_6$, haloalcényle en $C_2$-$C_6$, haloalcynyle en $C_2$-$C_6$, alkoxy en $C_1$-$C_6$, alcényloxy en $C_2$-$C_6$, alcynyloxy en $C_2$-$C_6$, haloalkoxy en $C_1$-$C_6$, haloalcynyloxy en $C_2$-$C_6$ ou haloalcényloxy en $C_2$-$C_6$ ;

$R^{26}$ représente un atome d'hydrogène ou un groupe alkyle en $C_1$-$C_6$ ;

$R^{27}$ représente un atome d'hydrogène, un groupe alkyle en $C_1$-$C_6$ ou alkoxy en $C_1$-$C_6$ ; ou

$R^{26}$ et $R^{27}$ forment conjointement un groupe $(CH_2)_2$, $(CH_2)_3$, $(CH_2)_4$, $(CH_2)_5$ ou $(CH_2)_2O(CH_2)_2$ ;

$R^{28}$ représente un groupe alkyle en $C_1$-$C_4$, haloalkyle en $C_1$-$C_4$ ou $NR^{26}R^{27}$;

k vaut 0, 1, 2 ou 3;

n vaut 0 ou 1 ;

p vaut 1, 2 ou 3;

q vaut 0, 1 ou 2;

v vaut 0, 1, 2, 3, 4 ou 5;

w vaut 0, 1, 2 ou 3,

et

B) au moins un composé (composant B) pris dans le groupe constitué par

acetochlor, alachlor, atrazin, bromoxynil, carfentrazone-ethyl, diflufenzopyr, dimethenamid, flufenacet, flumetsulam, fluthiacet-methyl, halosulfuron, imazamox, imazapyr, imazaquin, imazethapyr, iodosulfuron, metolachlor, metosulam, metribuzin, nicosulfuron, pethoxamid, pendimethalin, primisulfuron, prosulfuron, pyridate, rimsulfuron, thenylchlor, thifensulfuron-methyl, tritosulfuron et N-[(4,6-diméthoxy-pyrimidin-2-yl)-aminocarbonyl]-2-diméthylaminocarbonyl-5-formyl-benzènesulfonamide,

ces agents dans les composés de formule (I) ou leurs sels (Composant A) et les composés du groupe B (Composant B) sont contenus dans un rapport en masse de 1:2000 à 2000:1.

**2.** Agents herbicides selon la revendication 1, **caractérisés en ce qu'**ils contiennent bromoxynil, diflufenzopyr, iodosulfuron, nicosulfuron, rimsulfuron ou N-[(4,6-diméthoxy-pyrimidin-2-yl)-aminocarbonyl]-2-diméthylamino-carbonyl-5-formyl-benzènesulfonamide.

**3.** Agents herbicides selon la revendication 1 ou 2, **caractérisés en ce que** le rapport en masse A:B des herbicides combinés A) et B) se situe dans la plage de 1:20 à 50:1.

**4.** Agents herbicides selon l'une des revendications 1 à 3, **caractérisés en ce qu'**ils contiennent 0,1-99 % en masse d'herbicides A) et B) et de 99 à 0,1 % en masse de formulants usuels dans la phytoprotection.

**5.** Procédé pour la lutte contre une croissance végétale indésirable, **caractérisé en ce qu'**on applique un ou plusieurs herbicides A) avec un ou plusieurs herbicides B) sur les plantes adventices, les parties de plantes ou la surface cultivable, la combinaison des herbicides A) et B) étant définie comme dans une des revendications 1 à 4.

**6.** Utilisation d'une combinaison des herbicides A) et B) en tant qu'agent herbicide pour la lutte contre une croissance végétale indésirable, la combinaison des herbicides A) et B) étant définie comme dans une des revendications 1 à 4.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9723135 A
- EP 0810227 A
- WO 9829406 A
- WO 9906259 A
- WO 9703562 A
- EP 0569944 A2
- EP 0614606 A2
- DE 4421342 A1
- JP 5070426 A
- JP 4230301 A
- WO 9828981 A
- FR 2675340 A
- WO 9528839 A
- EP 0230596 A2


### In der Beschreibung aufgeführte Nicht-Patentliteratur


- The Pesticide Manual. British Crop Protection Council, 1997, vol. 11
- **WINNACKER-KÜCHLER.** Chemische Technologie. C. Hauser Verlag, 1986, vol. 7
- **VAN VALKENBURG.** Pesticides Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **S. R. COLBY.** *Weeds,* 1967, vol. 15, 20-22